(19) Europäisches Patentamt
European Patent Office
Office européen des brevets

(11) **EP 4 517 647 A1**

(12) **EUROPEAN PATENT APPLICATION**

(43) Date of publication:
**05.03.2025 Bulletin 2025/10**

(21) Application number: **24190993.6**

(22) Date of filing: **25.07.2024**

(51) International Patent Classification (IPC):
**G06T 3/4046** (2024.01)   **G06T 3/4053** (2024.01)
**G06N 3/063** (2023.01)

(52) Cooperative Patent Classification (CPC):
**G06T 3/4046; G06N 3/045; G06N 3/063;
G06T 3/4053**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 US 202318458593**

(71) Applicant: **Avago Technologies International
Sales
Pte. Limited
Singapore 768923 (SG)**

(72) Inventors:
- **Wyman, Richard Haydan
  Irvine, 92618 (US)**
- **Berbecel, Gheorghe
  Irvine, 92618 (US)**

(74) Representative: **Dilg, Haeusler, Schindelmann
Patentanwaltsgesellschaft mbH
Leonrodstraße 58
80636 München (DE)**

(54) **METHOD AND APPARATUS FOR SCALING AND SUPER-RESOLUTION BASED ON MACHINE LEARNING**

(57) In some embodiments, the method for scaling to a super resolution based on machine learning is provided. The method may include receiving a data stream. The device may include circuitry to upscale media by a scale factor to a super resolution. The circuitry can be configured with a number of one or more multipliers and adders for one or more neurons of one or more layers of a neural network (300, 400, 500). The number of one or more multipliers and adders can be determined based at least on the scale factor. The method may include determining a plurality of output data points corresponding to the one or more data points upscaled by the scale factor to the super resolution. The method may include providing as output the super resolution of the media. The method may further include identifying one or more features of one or more data points from the data stream.

Fig. 1

EP 4 517 647 A1

**Description**

BACKGROUND

The present disclosure relates generally to data processing, for example, digital video and/or audio processing, and, more particularly, to application of Machine Learning (ML) to generate a super-resolution output. Digital television and other display devices display a signal received from a digital video source. Digital display devices can have a different resolution than the sources of the digital signal, as display sizes and resolutions have evolved faster than the source video resolution.

SUMMARY

For display sizes and resolutions that are different from the source video resolution, methods have been developed to store the video signal, to transmit it efficiently and to display it on display devices. Such methods allow the conversion of a digital video signal from one video resolution to another resolution. Typically, the digital signal is represented in (i) YCbCr model, e.g., Luma (Y) and Chroma (Cb and Cr) and/or (ii) RGB model, e.g., R (red), G (green), and B (blue) color components. A sampling format of, for example, 4:4:4 or 4:2:2 or 4:2:0 can be selected. Also, for storage and transmission efficiency purposes, a video compression format such as, for example, Moving Picture Experts Group 2 (MPEG-2), Advanced Video Coding (AVC), Alliance for Open Media (AOMedia) Video 1 (AV1), High Efficiency Video Coding (H.265), Video Codec 9 (VP.9), Versatile Video Coding (H.266/VVC) can be used. When required, conversion between these formats can be performed. In order to display the video signal on a given display, one of the last processing stages that is performed before displaying is scaling. This can include changing the number of input lines (input_lines) and input columns (input_columns) for the digital video signal that is received by the display, into an output number of lines (output_lines) and output number of columns (output_columns), which can be different than the number of lines and columns received at the input. The output_lines and output_colunms may be determined by a desired and available resolution output over an interface such as HDMI. The output_lines and output_columns may represent the native pixel format of the display panel of a TV and/or monitor. Due to the natural characteristic of the four parameters (input_lines, input_columns, output_lines, output_columns), they are integer positive numbers, and the purpose of digital scaling is to convert each incoming video frame from its input (e.g., input_lines, input_columns) to the display output (e.g., output_lines, output_columns). Typically, in the process of scaling, the input pixels can have a finite size in space (for example, the size can be equal to the unity, e.g., one unit) and generate a rectangle. The process of scaling includes defining an output sampling grid that falls anywhere inside that rectangle. The purpose of digital scaling can be to calculate the pixel value in that arbitrary chosen position (called the position of interest). There are methods that were developed to accomplish such calculations: for example, a zero (0) order interpolation (e.g., adopting a value of the closest existing pixel in the input), a linear interpolation or a first order interpolation (e.g., adopting an average value of the closest existing pixels to the position of interest), and similar methods which can, for example, linearly interpolate input pixels in a vicinity of the position of interest.

Linear interpolation can have limitations for higher sampling rates because, for example, it cannot typically add extra information that is required for the broader signal spectrum created by a higher sampling rate (for example, in the case of up-sampling, when the number of output_columns is greater than the number of input_columns). Linear interpolation assumes that the function being interpolated is continuous and linear between the sampled points. However, the function being interpolated may not be continuous or linear, as it can lead to inaccurate or misleading estimates of values between the sample points. The error of linear interpolation is higher for signals with sharp edges or rapid changes in amplitude or frequency. The linear interpolation can introduce artifacts or distortions in the signal, particularly at high frequencies, because linear interpolation may not consider the higher frequency components of the signal, which can lead to aliasing or smoothing of the signal. As the sampling rate increases, the distance between the sample points becomes smaller, and the higher frequency components become more significant. The linear interpolation may not accurately capture the higher frequency components, leading to distortions or inaccuracies in the estimated values.

The linear methods of scaling can be disadvantageous due to the lack of resolution as the resolution is perceived on the display. Without specific methods to artificially add information in the newly available spectrum, the quality of the data (e.g., a video signal as provided by the display) can be diminished and the viewer may see on the display, for example, a stair-step where the viewer expects a perfect diagonal line. Non-linear methods of scaling that "learn" to associate a given pattern in the input with a "desired" pattern in the output can fulfill the task of populating the new space created in the frequency spectrum with information that is statistically correlated with the information in the existing portion of the frequency spectrum.

Typical on-chip super-resolution scaling based on machine learning employs an architecture involving an array of programmable parallel processors (e.g., GPU cores, CPU cores, and/or Neural Processors) and a data bus reading and writing data into a DRAM memory. Such conventional solutions can require large areas of a semiconductor chip and can consume substantial power and memory bandwidth to frequently move data in and out of the DRAM memory. Therefore, there is a need for a more efficient approach to generating a scaled output having a super resolution.

A human eye perceives resolution by observing the high frequencies in the spatial domain, as they are present in the video content. In signal processing, for a sampling period $T_0$, the maximum frequency can be $\Omega_0$. The maximum frequency $\Omega_0$ can be represented as $2*\pi/T_0$. A sampling rate is inversely proportional to the sampling period. By increasing the sampling rate (e.g., by reducing the sampling period from $T_0$ to $T_1$) a digital image can be displayed on a display that has a larger number of lines and columns than the input video signal. The largest frequency that can be fit into the output signal becomes $\Omega_1$, where:

$$\Omega_0 = 2*\pi/T_0 \qquad\qquad (1)$$

$$\Omega_1 = 2*\pi/T_1 \qquad\qquad (2)$$

$$T_1 < T0; \Omega_1 > \Omega_0 \qquad\qquad (3)$$

The purpose of the systems and methods disclosed herein is to fill in the extra space created in the frequency domain, specifically to add information in the range $[\Omega_0, \Omega_1]$.

The information is added in a form of details in the image and an increase in the sharpness, without significantly changing the low frequencies which generate the impression of the content presented in the image.

This method employs machine learning, specifically through a training process that is computationally intensive. In some embodiments, the training process can be performed, for example, offline. "Offline" can generally refer to performing tasks, including data collection, preprocessing, model training, and evaluation, on a local machine or a closed environment without having real-time access to the internet or external resources. For example, all necessary data, software, and resources needed for training the ML model can be available locally, and the training process can be self-contained, e.g., not communicating with external servers or online services.

The training process calculates the programing parameters of a neural network that has input signals with a frequency content in the range $[0, \Omega_0]$ and output versions of the same signals with frequencies in the range $[0, \Omega_1]$. At the end of the training, the programing parameters will be calculated such that during the inference or determination process for any signal with a content in the range $[0, \Omega_0]$, its counterpart in the range $[0, \Omega_1]$ will be generated.

This higher frequency signal may not be unique and can depend on the neural network and/or on its training. The present disclosure describes a neural network that is designed such that the neural network is optimal from an efficiency perspective for implementation in hardware and/or software.

Generally, a neural network can refer to a computational method that processes information and recognizes patterns to establish a correlation between inputs and outputs by utilizing interconnected processing units or neurons. Using the received input information, the neural network can generate an output at least based on acquired internal representations of the neural network. Through a training process, the neural network can adapt its internal parameters or weights to improve performance for a given task. This optimization typically involves minimizing a loss or error function that measures the disparity between network predictions and expected outputs. The neural network can automatically extract relevant features and patterns from input data, enabling precise predictions or classifications for new inputs. The architecture of the neural network, including factors such as layer count, neuron count per layer, and connectivity patterns, can be designed to represent the underlying structure of the data.

From a deep learning perspective, the neural network comprises a sequence of layers of neurons. The neuron, serving as a component of the neural network, can be implemented electronically or electrically in circuitry or as executable instructions on processor(s). In operation, the neuron can receive inputs and apply a non-linear activation function to produce an output. The neuron can function as a computational unit within the neural network. Multipliers, sometimes referred to as weights assigned to inter-neuronal connections, act as arithmetic units for multiplication operations in neural networks. During the forward propagation phase, input values can be multiplied by their corresponding weights, enabling the computation of a weighted sum. The multipliers can adjust the strength of connections between neurons, facilitating adaptability within the network. Adders, sometimes referred to as summing units or summation nodes, are utilized within a neural network to aggregate the weighted inputs originating from the preceding layer or preceding neurons within the same layer. The output of an adder can be subjected to an activation function, introducing non-linearity and generating the final output of the neuron.

A layer of the neural network represents a distinct or separate level of computation within the network architecture. The layers of the neural network are building blocks for information processing and feature extraction. The layer can include interconnected neurons or units that collectively contribute to the functionality of the neural network. In operation, a layer can receive inputs from a preceding layer or directly from the input data. The layer performs computations at least based on these inputs, applying specific operations or transformations to generate outputs. Each layer can typically incorporate multiple neurons, where each neuron can process a subset of the inputs. The outputs of the layer can serve as inputs for the subsequent layer in the network. The layers can enable the neural network to capture complex relationships and patterns in the data. The layers facilitate a hierarchical representation and abstraction of information, allowing the neural network to progressively extract higher-level features from lower-level representations. Various types of layers, such as convolutional layers, fully connected layers, and/or recurrent layers, may be utilized using the specific architecture and/or task requirements of the neural network.

Typically, a training process of the neural network can refer to an iterative process that involves modifying the weights for neurons to achieve the output parameters for given inputs. During the training process of the neural network, the weights associated with each neuron can be modified to improve the neural network performance. Through these modifications, the network can improve the output parameters using a specific input dataset. The training process can follow an iterative approach, where the network is exposed to the training dataset multiple times. In each iteration, the network receives input data, performs forward propagation through the layers to generate an output, and compares the output to the expected output. The difference between the received and expected output is quantified using a loss function. The weights are adjusted to minimize the loss function, improving the accuracy of the neural network predictions. The training process can be conducted using techniques such as gradient descent that calculates the gradients of the loss function with respect to the weights. The weights can be updated in the opposite direction of the gradients, gradually moving towards a configuration that minimizes the loss function. The training process typically consists of two main stages: a forward propagation and a backpropagation. In forward error propagation, the input data is processed layer by layer, where a layer transforms the data using the current weights. The output can be generated, and the loss function can be calculated. In the reverse error propagation, known as backpropagation, the gradients of the loss function are propagated backward through the layers. In some embodiments, the gradients indicate the contribution of each weight to the loss function, allowing for adjustments during the step of updating the weights. The training process can continue for multiple iterations or until a termination condition is met, such as reaching a certain level of accuracy or observing diminishing improvements. By iteratively adjusting the weights using observed errors, the network gradually learns to make more accurate predictions and generalize its knowledge to predict accurate output for an untested new input.

In some embodiments, the neuron can be defined as a block performing multiplications between a set of input data $d_0, d_1, ... , d_{n-1}$ and constants $w_0, w_1, ... , w_{n-1}$ called weights and adder adding a bias and an application of an activation function.

$$Output = activation(d_0w_0+d_1w_1+d_2w_2+.....+ d_{n-1}* w_{n-1}+bias) \qquad (4)$$

An example of an activation function can be represented as follows:

$$Activation(x) = x/8 \text{ if } x>0, \text{ and } Activation(x) = 0 \text{ otherwise.} \qquad (5)$$

For efficiency of implementation, the present disclosure relates to a set of multipliers and adders that can be configured to calculate the argument of the activation function as shown in formula (4) and a collection of activation functions that implement a neuron. By iterating this process multiple layers can be implemented and together these layers can implement neural network models. Through the training process (that can be for example, offline), the weights and biases necessary to configure the neural network can be derived. The above configured neural network model can be applied for inference or determination. For example, using the input video with a sampling rate defined by a super-resolution version of the input video, the neural network can be generated, and the output can be displayed such that the viewer will have a maximum sharpness that a specific display device is capable of displaying.

A clock is a circuit that provides signals that are used to synchronize different or separate digital circuits or computer operations. In some embodiments, an input clock may refer to a timing signal used in digital systems to synchronize various operations and components. In machine learning, the term "input clock" can refer to the flow of input data or the rate at which inputs are received and/or processed. The input clock can represent the temporal aspect at which the model receives and/or processes the input data. The input clock may not pertain to a physical signal and the input clock can serve as a representation of the data stream.

An output clock can refer to a timing signal generated by a digital system or device using processing or modifying an input clock. The output clock is a signal that carries the timing information for functioning and synchronization of various components or external systems. In machine learning, the term "output clock" can refer to a rate at which the machine model generates processed output predicted using the input data. The output clock can represent the frequency at which predictions are produced by the ML model.

In some embodiments, to take advantage of the fact that, for upscaling, the output clock is faster than the input clock and by choosing the processing clock to be higher than the input clock, some of the multipliers can be reused for the purpose of calculating the result of one neuron.

In some embodiments, a number of multipliers and adders at least based on the scale factor can be determined during the pre-production phase. In some embodiments, an analysis can be conducted to identify the number of multipliers and adders in alignment with the specific objectives of the chip design. Various techniques can be used to determine the number of multipliers and adders, facilitating improved characteristics of the chip.

In some embodiments, multiple machine learning networks can be implemented in a chip by using the same array of multipliers and adders by configuring the multipliers and adders into a predefined network and loading the network with the appropriate weights and biases. The process of configuring a system into a specific network can be replaced with a relatively simple configuration of the array of multipliers and adders and loading the network with appropriate weights and biases as the multipliers and adders are generated or provided by the network training.

In some embodiments, the number of multipliers and adders at least based on the scale factor can be determined by a firmware at or near run time to support a range of scale factors and configuring the neurons having the multipliers and adders according to the scale factors. In some embodiments, the range of scale factors can be limited, for example, by the number of multipliers and adders available on the chip. For example, the number of multipliers and adders can be determined by the firmware module operating within the system, executing algorithms and processes in or near real-time. The firmware can analyze various run-time factors, system parameters, and contextual inputs to determine an optimal value of the number of multipliers and adders. The determination of the number of multipliers and adders can accommodate different scale factors, enabling a relatively seamless compatibility and efficient utilization of system resources. By leveraging the firmware decision-making capabilities, the system can configure the number of multipliers and adders to ensure improved performance and functionality across the relatively broad spectrum of the scale factors. Such approach enhances the versatility and adaptability of the system for a relatively wide range of the scale factors with improved efficiency and effectiveness.

During the training process, in order to maximize the quality of the model, the range of the weights and biases can be unrestricted to a given range (e.g., the weights and biases may exceed a given resolution of the representation). In some embodiments, the multiplications can be performed using a fixed-point method that uses a variable precision (e.g., the precision that can be dynamically adjusted). In some embodiments, for a thirteen-bits data stream, there can be (i) eight integer bits and five fractional bits, or (ii) nine integer bits and four fractional bits. In some embodiments, there can be a nominal position of the decimal (or binary) point in a representation for the weights and biases and a nominal position of the decimal (or binary) point in the output of the result. In some embodiments, the decimal (or binary) point of representation can be moved toward higher resolution or lower resolution such that a greater range of weights and biases can be achieved (by reducing the precision of the fractional part) or to provide more precision of the calculation if the actual precision of the weights and biases permits. The novelty of this method and apparatus includes an ability to perform scaling and super-resolution of arbitrary scale factors by employing a set of fixed precision multipliers and adders.

A system of one or more computers can be configured to perform particular operations or actions by virtue of having software, firmware, hardware, or a combination thereof installed on the system that, in operation, causes or causes the system to perform the actions. One or more computer programs can be configured to perform particular operations or actions by virtue of including instructions that, when executed by an apparatus for scaling and super resolution, cause the apparatus to perform the actions. In one general aspect, a method may include receiving, by a device, a data stream that can include media. In some embodiments, the device may include circuitry to upscale, by a scale factor, the media to a super resolution. In some embodiments, the circuitry can be configured with a number of one or more multipliers and adders to implement one or more neurons of one or more layers of a neural network. In some embodiments, the number of one or more multipliers and adders can be determined based at least on the scale factor. In some embodiments, the method may also include determining, by the circuitry of the neural network responsive to input of the one or more data points to the neural network, a plurality of output data points corresponding to the one or more data points upscaled by the scale factor to the super resolution. In some embodiments, the method may also include providing as output, by the device, the super resolution of the media. In some embodiments, the method may include identifying, by the circuitry of the device, one or more features of the one or more data points from the data stream and providing the one or more features as input to the neural network. In some embodiments, the method may include determining, by the neural network, one or more features of the one or more data points and using the one or more features to determine the plurality of output data points.

Other embodiments of this aspect include an output clock of at least one or more of the number of one or more multipliers that can operate at a higher rate than an input clock of the circuitry. In some embodiments, the circuitry may include at least one or more of the number of one or more multipliers that are re-useable, based at least on the higher rate of the output clock than the input clock, to implement another neuron of the one or more neurons of the neural network. In some embodiments, the device may include an area implemented on a semiconductor chip that is less than an area of a central processing unit, a graphics processing unit, or a neural processing unit to implement a corresponding neural network.

Other embodiments of this aspect include the method where the media includes a video. In some embodiments, the circuitry may include the neural network that uses fixed precision multipliers and adders to implement a neuron. In some embodiments, the one or more layers of the neural network may include a set of neurons and bits of precision corresponding to each neuron of the set of neurons and a set of positions of a bit point in an output of each neuron. In some embodiments, the method may also include the neural network, where each multiplier in the neuron is configured, by the circuitry of the device, to run during at least one phase to generate the output.

Other embodiments of this aspect include the method where a training process of the neural network derives first weights and biases to configure each neuron and where second weights and biases having a floating point are converted to third weights and biases having a fixed point such that overflowing and underflowing of each neuron is reduced. In some embodiments, the training process of the neural network derives first weights and biases to configure each neuron, and second weights and biases have a floating point that can be converted to third weights and biases having a fixed point such that a range of the weights and biases is increased. Some embodiments of this aspect include the method where a bit-shift value is determined at an output of each neuron.

In one general aspect, a circuitry may include a number of one or more multipliers and adders implementing one or more neurons of one or more layers of a neural network. In some embodiments, the number of one or more multipliers and adders is determined based at least on a scale factor for upscaling a media. In some embodiments, the circuitry is configured to upscale by the scale factor the media to a super resolution. In some embodiments, the circuitry is configured to receive a data stream. In some embodiments, the circuitry is configured to determine at least based on input of the one or more data points to the neural network, a plurality of output data points corresponding to the one or more data points upscaled by the scale factor to the super resolution. In some embodiments, the circuitry is configured to provide as output the super resolution of the media. In some embodiments, an area of the circuitry implemented on a semiconductor chip is less than one mm$^2$. Some embodiments of this aspect include the circuitry where the media comprises a video.

In one general aspect, a system can include one or more processors of circuitry. In some embodiments, the circuitry can include a number of one or more multipliers and adders implementing one or more neurons of one or more layers of a neural network. In some embodiments, the number of one or more multipliers and adders can be determined based at least on a scale factor for upscaling a media. In some embodiments, the circuitry can be configured to upscale by the scale factor the media to a super resolution. In some embodiments, the circuitry is configured to receive a data stream. In some embodiments, the circuitry is configured to determine, at least based on input of the one or more data points to the neural network, a plurality of output data points corresponding to the one or more data points upscaled by the scale factor to the super resolution. In some embodiments, the circuitry is configured to provide as output the super resolution of the media.

Other embodiments of this aspect include the system, where an output clock of at least one or more of the number of one or more multipliers operates at a higher rate than an input clock of the circuitry. Some embodiments of this aspect include the system, where the at least one or more of the number of one or more multipliers are re-useable, based at least on the higher rate of the output clock than the input clock, to implement another neuron of the one or more neurons of the neural network. Other embodiments of this aspect include the circuitry that can use a memory bandwidth for creating the super resolution of the media without adding the memory bandwidth.

In some embodiments, a processing block of the circuitry is configured to be disabled, and the circuitry is configured to be set in a mode wherein the circuitry is loaded to a limit of a bandwidth of a memory of the circuitry. In some embodiments, the circuitry continues to function without reaching the limit of the bandwidth of the memory of the circuitry in response to the processing block of the circuitry being enabled. Some embodiments of this aspect include the system, where an area of the circuitry implemented on a semiconductor chip is less than an area of a central processing unit, a graphics processing unit, or a neural processing unit to implement a corresponding neural network. Some embodiments of this aspect include the system, where the media comprises a video.

In one general aspect, a method of controlling a device for scaling and super-resolution may include receiving, by one or more processors of the device, a data stream. In some embodiments, the method may also include configuring, by the one or more processors of the device, multipliers and adders. In some embodiments, the method may furthermore include implementing, by the one or more processors of the device, a neural network at least based on the multipliers and the adders. In some embodiments, the method may include receiving, by the one or more processors of the device, features derived from at least the data stream. In some embodiments, the method may moreover include selecting, by the one or more processors of the device, input data points from the data stream. In some embodiments, the method may also include configuring, by the one or more processors of the device, an input to the neural network having the input data points and the features. In some embodiments, the method may furthermore include performing inferences, by the one or more processors of the device using the neural network, at least based on the input to the neural network. In some embodiments, the method may include creating, by the one or more processors of the device, a scaled and super-resolution output. Other embodiments of this aspect include corresponding computer systems, apparatus, and computer programs recorded on one or more computer storage devices, each configured to perform the actions of the methods.

Implementations may include one or more of the following features. In some embodiments, the method may include performing, by the one or more processors of the device, scaling and super-resolution where the scaled and super-resolution output is not stored in a dynamic random-access memory, and where an intermediary output of the neural network is not stored in the dynamic random-access memory. In some embodiments, the one or more processors of the device can use an initial bandwidth memory for creating the scaled and super-resolution output. In some embodiments, the one or more processors of the device derives a set of input data points corresponding to an output data point such that the set of input data points includes the input data point that is physically the closest input data point to the position of the output pixel. In some embodiments, the method can use the features that represent a local frequency characteristic of the data stream. In some embodiments, the one or more processors of the device configures fixed precision multipliers and adders to implement a neuron. In some embodiments, the neural network may include at least one layer having a set of neurons and bits of precision corresponding to each neuron, as well as a set of positions of a bit point in an output of each neuron, where each multiplier in the neuron is configured, by the one or more processors of the device, to run during at least one phase to generate the output, where a training input data and a training output data are provided by at least one of a user or the one or more processors of the device, and where a training process of the neural network derives weights and biases to configure each neuron. In some embodiments, the weights and biases having a floating point are converted to weights and biases having a fixed point such that overflowing and underflowing of each neuron is substantially reduced. In some embodiments, the weights and biases having a floating point are converted to weights and biases having a fixed point such that a range of the weights and biases is maximized. In some embodiments, a bit-shift value is determined at the output at each neuron. In some embodiments, the data stream is decoded. In some embodiments, the data stream may include a video stream. In some embodiments, the input data points may include input pixels and where the output data point may include an output pixel. In some embodiments, the data stream may include an audio stream. In some embodiments, a total number of multipliers and adders is equal or greater than 100. In some embodiments, a processing block of the device is configured to implement the method may include a pattern including a substantially regular array of multipliers and adders. In some embodiments, a processing block of the device is configured to be disabled, and the device is set in a mode where the device is configured to be loaded to a maximum limit of a bandwidth of a memory of the device; and the device continues to function without reaching the maximum limit of the bandwidth of the memory of the device in response to the processing block of the device being enabled. Implementations of the described techniques may include hardware, a method or process, or a computer tangible medium.

In one general aspect, the device may include one or more processors configured to receive a data stream, configure multipliers and adders, implement a neural network at least based on the multipliers and the adders, receive features derived from at least the data stream, select input data points from the data stream, configure an input to the neural network having the input data points and the features, perform inferences using the neural network, at least based on the input to the neural network, and create a scaled and super-resolution output. Other embodiments of this aspect include corresponding computer systems, apparatus, and computer programs recorded on one or more computer storage devices, each configured to perform the actions of the methods.

Implementations may include one or more of the following aspects: a device where the one or more processors are further configured to perform scaling and super-resolution where the scaled and super-resolution output is not stored in a dynamic random-access memory, and where an intermediary output of the neural network is not stored the dynamic random-access memory.

Implementations may include a circuitry, which can be a semiconductor device other than a central processing unit, a graphics processing unit, or a neural processing unit.

BRIEF DESCRIPTION OF THE DRAWINGS

Non-limiting embodiments of the present disclosure are described by way of example with reference to the accompanying figures, which are schematic and are not intended to be drawn to scale. Unless indicated as representing the background art, the figures represent aspects of the disclosure. For purposes of clarity, not every component may be labeled in every drawing. In the drawings:

FIG. 1 illustrates a block diagram of a system for creating a super-resolution output using machine learning, in accordance with one or more embodiments;

FIGS. 2A-2C illustrate a spectrum transformation during generation of a video scaling and super-resolution, in accordance with one or more embodiments;

FIG. 3 an illustration of a neuron implementation, in accordance with one or more embodiments;

FIG. 4 is an illustration of integer and fractional bits for implementing a neuron, in accordance with one or more embodiments;

FIG. 5 illustrates a neuron implemented in two phases using half of the number of multipliers required by a direct implementation, in accordance with one or more embodiments;

FIG. 6 illustrates a nominal precision of a neuron, in accordance with one or more embodiments;

FIG. 7 illustrates a precision of a neuron when a range of weights exceeds a nominal range but does not exceed a doubled value of the range of the weights, in accordance with one or more embodiments;

FIG. 8 is a method to derive a neural network performing the scaling and super-resolution from available multipliers and adders, in accordance with one or more embodiments;

FIG. 9A is a block diagram depicting an embodiment of a computing environment including one or more access points in communication with one or more wireless devices or stations; and

FIGS. 9B and 9C are block diagrams depicting embodiments of computing devices useful in connection with the methods and systems described herein.

DETAILED DESCRIPTION

According to some embodiments, the present disclosure enables configuration of a set of multipliers and adders into a plurality of neural networks performing video scaling and super-resolution. Super resolution refers to a process of enhancing a resolution of an image or video. In some embodiments, super resolution data can refer to a set of digitally represented information that has undergone an enhancement process to improve its resolution and quality. A super resolution processes can generate a higher-resolution image from a low-resolution version of the image. Super resolution processes can include analysis of the lower resolution image data and applying interpolation, extrapolation, or machine learning-based techniques to generate the missing details in the higher-resolution image. In some embodiments, the resulting super resolution data exhibits an increase in visual quality, incorporating additional details and clarity. By improving the resolution of the data, finer details and intricate features can be discerned, facilitating accurate analysis and interpretation. Furthermore, the visual quality of the super resolution data contributes to immersive and realistic rendering, elevating user experiences.

In some embodiments, an output that may include output lines and output columns of an image, generally denoted as output_lines and output_columns, respectively, may depend on a desired and available resolution output in an interface, such as, for example, HDMI. In some embodiments, the output may represent the native pixel format of the display panel of, for example, a TV or a monitor. In some embodiments, when the output is configured into the neural network, an input that includes pixel data (and/or features described below that can be derived from the input data) are processed by the neural network to create one or more output pixels representing a scaled and sharpened output. In some embodiments, for an output pixel, its physical position in the output image can be used to determine the closest pixel in the input to that physical position and a neighborhood or vicinity of pixels to the closest pixel will be included in the input. In some embodiments, other features related to the pixels in the neighborhood or vicinity, for example, local frequencies can be used as input.

The systems and methods described herein implement a hardware component (e.g., a hardware block in a programmable processor such as a field-programmable gate array or other programmable logic, and the like) after the media decoders in the media processing pipeline, which directly receives the decoded media content and generates features and parameters that are compatible with machine-learning processors.

A "feature" may refer to a distinct measurable characteristic of the data. For example, the features can capture specific traits of the data that are pertinent to a given task. The features can be quantitative or qualitative attributes that can depend on the nature of the processed data. For example, color histograms may capture the distribution of color intensities in image processing, spectral features can represent the frequency content of audio signals in audio processing. The selection and design of features can be executed to extract meaningful information that facilitates problem-solving in the assigned task.

In some embodiments, the features can be selected or engineered to extract the most pertinent information from the data. The features can be used to identify and represent patterns or properties that are significant for the specific machine learning task. For example, shape or texture-related features can be useful in discerning between different or separate objects or classes in image classification. The features can include discriminative information that empowers the machine learning algorithm to distinguish between distinct instances or categories.

Some examples of such features can include a luma histogram generated from raw video content, edge detection techniques, spectral analysis, motion vectors, or pixel parameters, among others. Similarly, for audio content, frequency bands, histograms, peaks, and other audio analyses (e.g., tonal, pitch, or harmonic analysis, and the like) may be implemented. Likewise, the generated features are significantly smaller than the original pixel data and may be used to target and simplify specific machine-learning algorithms or other useful processing algorithms. For example, the input data to machine-learning models, such as neural networks, are generally specified and predetermined, and therefore the features may be generated or customized to a desired machine-learning model or machine-learning framework. These and other improvements are described in further detail herein.

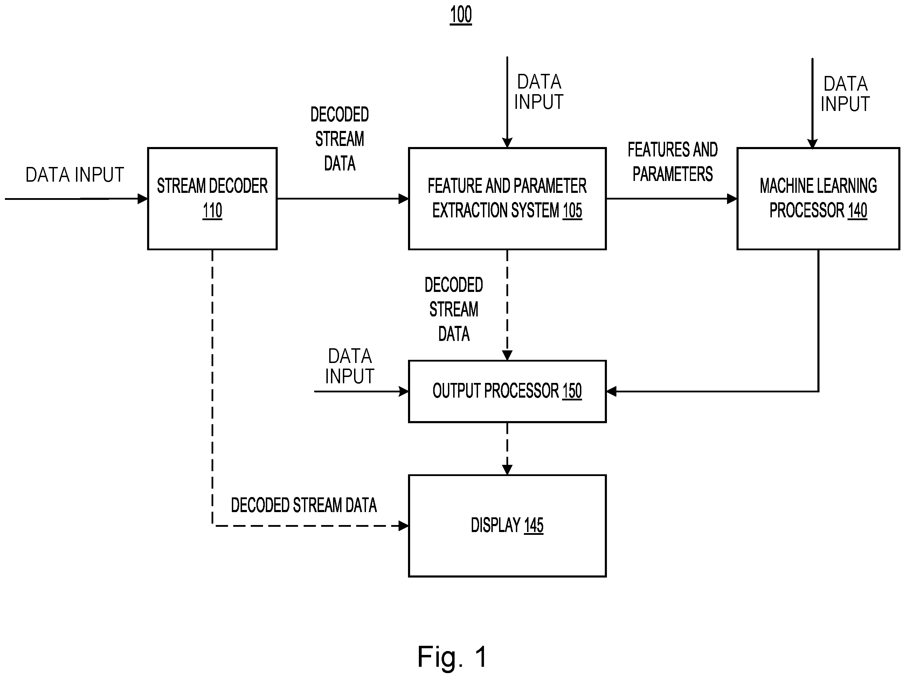

Referring now to FIG. 1, a block diagram of an example system 100 for scaling and super-resolution is illustrated, in accordance with one or more implementations. The system 100 can include at least one stream decoder 110, at least one machine-learning processor 140, at least one display 145, and in some implementations at least one output processor 150. The system 100 can include at least one feature and parameter extraction system 105 that can include at least one stream receiver, at least one feature and parameter identifier, at least one feature and parameter generator, one or more features and/or parameters (e.g., stored in a region of memory at the feature and parameter extraction system 105), and at least one feature and parameter provider. If, for example, the system 100 does not include the feature and parameter extraction system 105, the decoded stream data can be transmitted to the machine learning processor 140 and/or the output processor 150 without passing through the feature and parameter extraction system 105. The system 100 may include one processor or multiple processors.

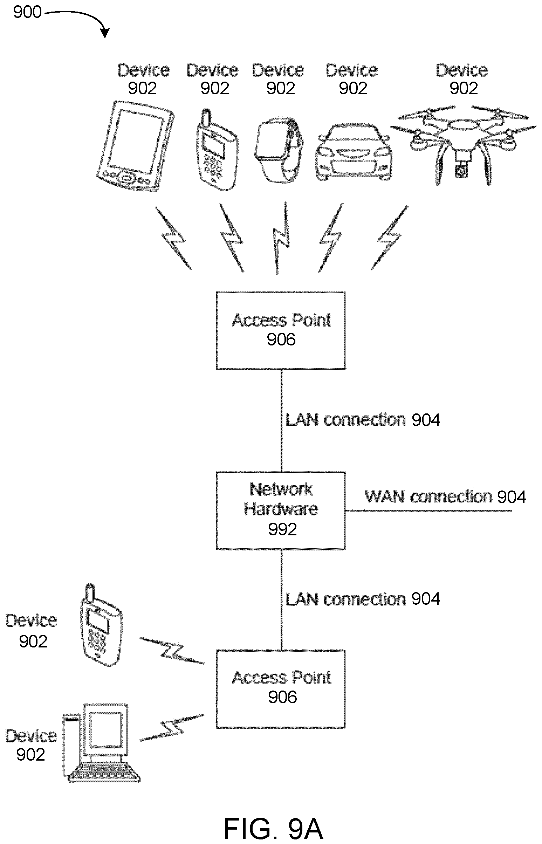

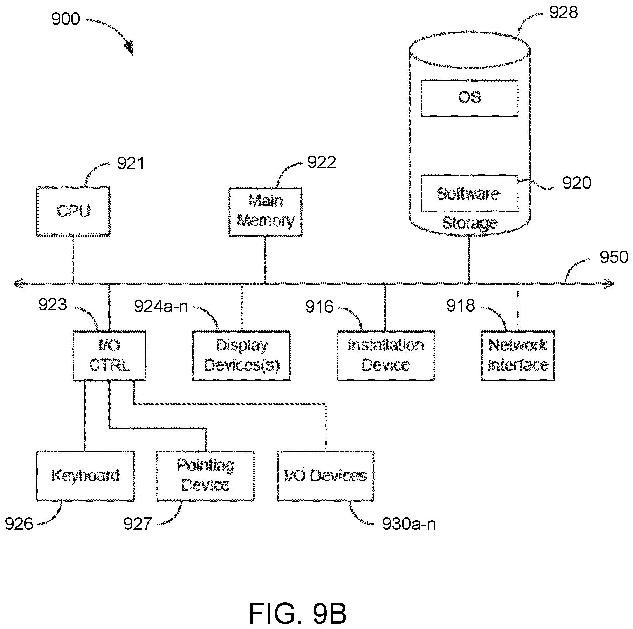

Each of the components (e.g., the feature and parameter extraction system 105, the stream decoder 110, the machine-learning processor 140, and the like) of the system 100 can be implemented using the hardware components or a combination of software with the hardware components of a computing system (e.g., computing system 900 described in connection with FIGS. 9A and 9B, etc.). In some implementations, the stream decoder 110 and the feature and parameter extraction system 105 may be hardware components defined in a configurable logic processor, such as a field-programmable gate array (FPGA) or an application-specific integrated circuit (ASIC). In some implementations, the machine-learning processor 140 may also be part of the same configurable logic processor. In some implementations, the stream decoder 110, the feature and parameter extraction system 105, and the machine learning processor 140 may be separate hardware or software components. Each of the components (e.g., the stream receiver, the feature and parameter identifier, the feature and parameter generator, the one or more features, and the feature and parameter provider) of the feature and parameter extraction system 105 may be implemented in software, hardware, or any combination of software or hardware, and can perform the functionalities detailed herein.

The feature and parameter extraction system 105 can include at least one processor and a memory, e.g., a processing circuit. The memory can store processor-executable instructions that, when executed by processor, cause the processor to perform one or more of the operations described herein. The processor may include a microprocessor, an ASIC, an FPGA, programmable logic circuits, or combinations thereof. The memory may include, but is not limited to, electronic, optical, magnetic, or any other storage or transmission device capable of providing the processor with program instructions. The memory may further include a floppy disk, CD-ROM, DVD, magnetic disk, memory chip, ASIC, FPGA, read-only memory (ROM), random-access memory (RAM), electrically erasable programmable ROM (EEPROM), erasable programmable ROM (EPROM), flash memory, optical media, or any other suitable memory from which the processor can read instructions. The instructions may include code from any suitable computer programming language. The feature and parameter extraction system 105 can include one or more computing devices or components. The feature and parameter extraction system 105 can include any or all the components and perform any or all the functions of the computer system 900 described in connection with FIGS. 9A and 9B. The feature and parameter extraction system 105 may communicate with the other components of the system 100 using one or more communications interfaces. The communications interface can be or include any type of wired or wireless communication system, including suitable computer or logical interfaces or busses, for conducting data communications.

The memory of the feature and parameter extraction system 105 can be any suitable computer memory that stores or maintains any of the information described in connection with the present techniques. The memory may store one or more data structures, which may contain, index, or otherwise store each of the values, pluralities, sets, variables, vectors, or thresholds described herein. The memory can be accessed using one or more memory addresses, index values, or identifiers of any item, structure, or region maintained in the memory. The memory can be accessed and modified by the components of the feature and parameter extraction system 105. In some implementations, the memory can be internal to the feature and parameter extraction system 105. In some implementations, the memory can exist external to the feature and parameter extraction system 105 and may be accessed via an appropriate communications interface (e.g., a communication bus, etc.). In some implementations, the memory may be distributed across many different computer systems or storage elements and may be accessed via a network or a suitable computer bus interface. The feature and parameter extraction system 105 can store, in one or more regions of the memory of the feature and parameter extraction system 105, the results of any or all computations, determinations, selections, identifications, generations, constructions, or calculations in one or more data structures indexed or identified with appropriate values.

The features can include any type of features that are derivable from a media stream (e.g., audio and/or video data, etc.). Some non-limiting examples of the features may include a luma histogram, edge detection plots (e.g., a matrix or data structure indicating locations of edges in video data, etc.), a spectral analysis information (e.g., one or more data structures that indicate spectral bands of one or more pixels in video data, etc.), motion vectors (e.g., locations, directions, and magnitudes of movement detected in video data, and the like), as well as various parameters, such as minimum pixel value (e.g., minimum intensity for one or more color channels across pixels in video data, etc.), maximum pixel value (e.g.,

maximum intensity for one or more color channels across pixels in video data, etc.), average pixel value (e.g., the average intensity of a pixel across one or more color channels, etc.), as well as information related to audio in the media stream (e.g., gain information, frequency bands, histograms for various parameters of the audio stream, peak information, tone information, pitch information, harmonic analysis information, and the like). The features may be formatted into one or more data structures by the components of the feature and parameter extraction system 105 to conform to one or more inputs of models or algorithms executing at the machine learning processor 140. In some implementations, a configuration setting may be stored at or provided to the feature and parameter extraction system 105 that specifies the type and format of features that should be generated from decoded media streams, as described herein.

In some embodiments, the features can be inputs to machine learning algorithms. The ML algorithms can learn from the provided features (that can be at least based on corresponding labels if such labels are available) to comprehend patterns and generate predictions or classifications on new unseen data inputs. The features can represent the data that algorithms can effectively process and/or analyze. By using knowledge from these features, the algorithms can discern underlying patterns or relationships and provide outputs using the new data inputs. In some embodiments, the machine learning algorithms can leverage the provided features to learn patterns or relationships within the data. By analyzing the patterns inherent in the feature representations, the algorithms can generate predictions or classifications. The ML algorithms can employ various techniques, including optimization methods and statistical models, to learn from the features and improve the performance of the ML algorithms with respect to the assigned task. In some embodiments, when the machine learning algorithm has acquired knowledge from the features, the ML algorithm can apply this knowledge to make predictions or classifications for new unseen data inputs. For example, the algorithm trained on image features in image processing may predict the presence of objects or classify images into distinct categories. The quality and relevance of the features can impact the accuracy and efficiency of the algorithm predictions or classifications.

The feature and parameter extraction system 105 may identify different features to generate from video content and audio content. For example, for video data, the feature and parameter extraction system may identify the types of features to generate as including one or more of a luma histogram, edge detection plots, object detection information (e.g., the presence of one or more objects in a video frame), object classification information (e.g., the classification of one or more objects in a video frame), spectral analysis information, motion vectors, as well as various parameters, such as minimum pixel value, maximum pixel value, or average pixel value. The parameters may also include parameters or properties of the video content, including resolution, bitrate, among other information. The features to generate for audio content may be identified as including, for example, gain information, frequency band histograms, other histograms for various parameters of the audio content, peak information (e.g., minimum, maximum, range values, and the like), tone information, pitch information, harmonic analysis information, a key of a song, or beats-per-minute in a song, among other audio features. The feature and parameter extraction system may enumerate the number of identified features.

Some examples of motion estimation algorithms include block-matching algorithms, phase correlation and frequency domain analysis algorithms, pixel recursive algorithms, and optical flow algorithms. In some implementations, the feature and parameter extraction system may generate motion vectors by performing corner detection on each frame in a sequence, and subsequently compare locations of the corners over time (e.g., between frames) using statistics functions such as random sample consensus (RANSAC) to estimate motion vectors.

The feature and parameter extraction system may generate the features to conform to a format corresponding to the machine learning processor 140. As described herein, the feature and parameter identifier may query the machine learning processor 140, or another configuration setting, to identify the format in which the features should be generated. The feature and parameter extraction system can receive this formatting information, which may specify the structure and content of the data structures that make up the features and generate the features using the techniques described herein to conform to the appropriate structure. In this way, the feature and parameter extraction system can generate the features to be compatible with a variety of customizable machine learning models or processes. The feature and parameter extraction system may store the generated features in the appropriate data structures in the memory of the feature and parameter extraction system 105.

The machine learning processor 140 may include at least one processor and a memory (e.g., a processing circuit), and may be defined as part of a configurable logic fabric that defines other components of the system 100. The memory can store processor-executable instructions that, when executed by processor, cause the processor to perform one or more of the operations described herein. The processor may include a microprocessor, an ASIC, an FPGA, programmable logic circuits, or combinations thereof. The memory may include, but is not limited to, electronic, optical, magnetic, or any other storage or transmission device capable of providing the processor with program instructions. The memory may further include a floppy disk, CD-ROM, DVD, magnetic disk, memory chip, ASIC, FPGA, ROM), RAM, EEPROM, EPROM, flash memory, optical media, or any other suitable memory from which the processor can read instructions. The instructions may include code from any suitable computer programming language. The machine learning processor 140 can include one or more computing devices or components. The machine learning processor 140 may include any or all the components and perform any or all the functions of the computer system 900 described in connection with FIGS. 9A and 9B. The machine learning processor 140 may communicate with the other components of the system 100 using one or more communications interfaces (not shown). The communications interface can be or include any type of wired or wireless communication system, including suitable computer or logical interfaces or busses, for conducting data communications.

The machine learning processor 140 may be a hardware processor, a software component, or a processor defined in configurable logic, which implements one or more processing algorithms on the features. The machine learning processor 140 may be able to execute any type of algorithm that is compatible with the features, which may include artificial intelligence models such as linear regression models, logistic regression models, decision tree models, support vector machine (SVM) models, naive Bayes models, k-nearest neighbor models, k-means models, random forest models, dimensionality reduction models, fully connected neural network models, recurrent neural network (RNN) models (e.g., long-short term memory (LSTM), independent RNNs, recursive RNNs, and the like), convolutional neural network (CNN) models, clustering algorithms, or unsupervised learning techniques, among others. The machine learning processor 140 may execute other types of algorithms over the features. The machine learning processor 140 may be configurable via programmable computer-readable instructions, which may be provided to the machine learning processor 140 via one or more suitable communications interfaces. The machine learning processor 140 may access portions of the memory of the feature and parameter extraction system 105, for example, the regions of memory that store any extracted or generated features. In some embodiments, the memory of the feature and parameter extraction system 105 may be an internal memory (e.g., not an external DRAM). In some embodiments, the memory of the feature and parameter extraction system 105 may be an on-chip memory (e.g., a memory integrated onto a microprocessor chip or onto an integrated circuit) and/or other on-chip state including various registers. In some embodiments, the feature and parameter extraction system 105 and the machine learning processor 140 can be electrically coupled entirely on-chip without a trip and/or a pathway to the DRAM.

A "data stream" or "bitstream" refers to a flow of data or bits. The data stream represents a sequence of binary digits (zeros and ones) that are transmitted or processed. Such flow of data can be transmitted over various mediums such as computer networks, communication channels, or storage devices. The data stream or bitstream can represent a flow of data, enabling the efficient transmission, processing, and consumption of information in various domains. During data streaming, information is transmitted or accessed at or near real-time when the information is generated or received. For example, a data stream can be considered as a stream of data packets or bits that are being transmitted or received. For example, in telecommunications, a data stream can refer to the transmission of digital information over a network. In audio and video streaming, a bitstream can represent a flow of compressed audio or video data that is decoded and played in or near real-time by the receiving device.

The term "media" can refer to a range of data formats that includes textual content, graphical images, audio recordings, video footage, and other types of digital or analog information. Media can represent information that can be stored, transmitted, or processed. Textual media can include written or typed content, such as documents, articles, manuscripts, books, or any textual representation. Textual media can include alphanumeric characters, symbols, and languages used to convey written information. Graphical media involves visual representations, including images, illustrations, photographs, diagrams, charts, and other visual content. Graphical media can include raster or vector graphics that capture visual details, colors, shapes, and patterns. Audio media can include sound recordings, music tracks, spoken words, or other auditory content. Audio media can include analog or digital representations of audio signals, such as MPEG-1 Audio Layer 3 (MP3) files, Waveform Audio (WAV) files, or other audio formats. Video media can include moving images with associated audio, for example, motion pictures, films, animations, recorded video footage, or real-time or near real-time video streams. Video media can include digital or analog representations of visual and auditory elements synchronized together. Media can include digital and/or analog information, for example, various data formats beyond text, images, audio, and video. The digital and/or analog information can include numerical data, sensor readings, measurements, binary codes, signals, or any other form of information that can be digitally and/or analogously represented.

The term "data points" can refer to individual units of information or observations that are collected and recorded as part of a dataset. The data points are the constituents of a dataset that include specific information for analysis. For example, the data points can represent distinct values or measurements associated with a particular variable, attribute, or aspect of a subject. The data points can be, for example, input data points and output data points.

The term "input data points" can refer to data points provided as input, such as to a system, circuitry, or a machine learning model for training or prediction. The input data points may represent features or attributes that are used to make predictions or perform a specific task. The input data points can include features, data representation, preprocessing, training, and interim prediction data points. For example, the input data points can consist of a set of features or variables that describe the characteristics or properties of the data. The features can be numerical, categorical, or textual, depending on the nature of the task. For example, if the task is to predict the performance of a computer system, the input data points may include features characterizing CPU speed, RAM capacity, disk size, operating system version, etc.

The input data points of the input data can represent a structured format suitable for machine learning algorithms. The input data points can include matrices, tensors, or tables where each row represents an individual data point, and each column represents a specific feature. The input data points may undergo preprocessing steps to prepare the input data points for training and/or prediction. The preprocessing of the input data points can include various tasks such as data cleaning, normalization, feature scaling, encoding categorical variables, handling missing values, or transforming the data to extract relevant information. During the training phase, the input data points can be used to train the machine learning model. The machine model can learn patterns and relationships within the input data to make accurate predictions. During the prediction phase, unseen new input data points are provided to the trained model to obtain predictions or perform the desired task.

The term "output data points" can refer to data points provided as output from a system, circuitry, or a machine learning model, such as the desired or predicted values produced by the machine learning model. The output data points represent a response of the ML model or output using the input data that the ML model has been trained on or is being tested with. In some embodiments, in classification tasks, the output data points represent the predicted class labels or categories assigned to input data points. In some embodiments, if the task is to classify images as either "cat" or "dog," the output data points can indicate the predicted class label for each image, such as "cat" or "dog."

In regression tasks, the output data points can be numerical values that the model predicts. For example, given a car image as input, the regression model could predict the age of the car in years as the output data point. The predicted ages can be numerical values, such as two years, five years, or ten years. The machine learning model can learn from the input images and the corresponding known ages during training, and the ML model can generalize to predict the age of new unseen car images. In object detection tasks, the output data points can be bounding boxes that indicate the location and/or size of objects of interest within an image or video. Each bounding box can be defined by its coordinates, such as the top-left corner coordinates and the width and height of the box. In sequence generation tasks, the output data points can represent a sequence of values or tokens generated by the model. The sequence generation tasks could include language translation, text generation, and/or music composition, where the ML model generates a sequence of words, sentences, and/or musical notes.

The output processor 150 may process individual pixels or groups of pixels of the decoded media stream before providing a final output to the display 145. Some examples of the output processing performed by the output processor 150 include, but are not limited to, filtering techniques (e.g., smoothing, sharpening, and the like), upscaling (e.g., from a lower resolution to a higher resolution), or color modification operations that modify the colors of one or more pixels in the decoded output stream. One or more graphical elements, such as bounding boxes, labels for characters identified in the media stream, text-based translations of audio in the decoded media stream, or other graphical content can be generated by the output processor 150 and displayed with the decoded media stream. These operations may be performed as a function of the outputs of the machine learning processor 140.

The stream decoder 110 can receive a bitstream or data input, for example, from a suitable computer communications interface. In some embodiments, the input to the system can be encoded or not encoded bitstream. Generally, the term "data input" can refer to a flow of data that is received and processed by the system 100. The specific characteristics of the data input can vary at least based on the intended application. The data input encompasses a broad spectrum of data types, including but not limited to images, numerical data, textual data, sensor readings, financial transactions, social media updates, log files, and any other digital and/or analog information formats. The data input can originate from various sources, such as IoT devices, web services, databases, social media platforms, and any other systems generating or providing data.

In some embodiments, inputs can be received, for example, from an external source (e.g., receiving a video input data through an HDMI connection). In some embodiments, inputs can be received from a visual capture system or an image capture device, such as a video conferencing camera receiving input data through camera serial interface (CSI) and/or a universal serial bus (USB) connection. In some embodiments, the USB may transmit a bitstream and/or raw data (e.g., unprocessed and/or unstructured data that has not undergone formatting, cleaning, and/or analysis). The source type of the input data can be decoded from its input bitstream and/or electrical format and converted into a common decoded stream data as input to the feature and parameter extraction system 105. In some embodiments, the input data is received by the output processor 150, the machine learning processor 140, and/or the feature and parameter extraction system 105. For example, in some embodiments, the video signals, such as uncompressed Y (luma), and Cb, Cr (Chroma) signals are not processed by the stream decoder 110 (that can be for example, a video decoder). In some embodiments, the machine learning processor 140 can add the features as an input to complement the video input and allow a smaller neural network.

In some embodiments, the encoded bitstream may be encoded by a subscription content provider, such as a cable provider, which the stream decoder 110 can decode to generate a decode media stream (e.g., raw video or audio content). The stream decoder 110 may include one or more frame buffers. The stream decoder 110 can decode compressed or otherwise encoded bitstreams received from a content provider system or network (not pictured). The decoded media content can take the form of one or more decoded video frames. Frame buffers, or other memory components of the stream decoder 110 or the feature and parameter extraction system 105, may store the decoded frames and any audio channels or audio content decoded from the encoded bitstreams. The stream decoder 110 may include any number of decoder components or frame buffer components and may simultaneously or concurrently decode multiple encoded bitstreams to generate multiple decoded media streams (each of which may be processed by the feature and parameter extraction system 105). The stream decoder 110 can include one or more hardware video decoders, which may perform decoding operations and subsequently provide resulting decoded frames (and any decoded audio data) to the feature and parameter extraction system 105. The stream decoder 110 may include additional buffers (e.g., input buffers for storing compressed or encoded bitstreams before they are decoded by the stream decoder 110), network interfaces, controllers, memory, input and output devices, conditional access components, and other components for audio, video, or data processing.

The stream decoder 110 can obtain one or more encoded bitstreams from a source of encoded content. The source can be a content provider, a service provider, a headend, a video camera, a storage device, a computing system, or any other system capable of providing an encoded bitstream of video, audio, or data content. For example, the encoded bitstreams can include video content (e.g., a program, a channel, and the like). In some embodiments, the encoded bitstream can include a video stream in a format of, for example, MPEG2, AVC, and/or High Efficiency Video Coding (HEVC) and the like. The video content may be encoded to have one or more predetermined resolutions (e.g., 2160p resolution vs. 1080p resolution), frame rates (e.g., 60 frames-per-second vs. 30 frames-per-second), bit precisions (e.g., 10 bits vs. 8 bits), or other video characteristics. The encoded bitstreams can be received via a cable network, a satellite, an internet, a cellular network, or other networks. For example, the cable network can run over coaxial cable, Bayonet Neill-Concelman (BNC) cable, Ethernet cable (such as Category 5, 5e, 6, and 7 wire), fiber optic cable or other high data transfer technologies. The cable network may be connected to a local or remote satellite dish.

The stream decoder 110 can generate decoded content streams from one or more received encoded bitstreams. The stream decoder 110 then provides the decoded content to the feature and parameter extraction system 105. In some implementations, the stream decoder 110 may provide the decoded content streams to the display 145, which may be any type of display device. In some implementations, the stream decoder 110 can generate additional video streams with different characteristics from the received encoded bitstream. For instance, the stream decoder 110 may include a transcoder that generates decoded content streams at a variety of resolutions. Such resolutions can include, for example, a 4K Ultra High Definition (UHD) (e.g., 3,840 x 2,160 pixels or 2160p) resolution. The stream decoder 110 receives an encoded bitstream of 4K/2160p content as input, decode it, and generate a lower resolution (e.g., 1080p, 720p, and the like) content stream. Similar operations may be performed to reduce the bitrate of audio data. In another example, the stream decoder 110 can generate content streams with other characteristics (e.g., frame rate, bit precision, bit rate, chroma subsampling). The stream decoder 110 may provide one or more of the generated (e.g., decoded) content streams to the feature and parameter extraction system 105. The stream decoder 110 may be, may include, or may be part of a media decoding pipeline.

The display 145 can be any type of display device capable of displaying decoded content streams generated by the stream decoder 110. Some non-limiting examples of types of the display 145 include a television, a computer monitor, a computer display, a projector, a tablet display, or a hand-held user device (e.g., smart phone) display, among others. In some implementations, the decoded content stream received by the feature and parameter extraction system 105 may be forwarded or otherwise provided to the display by the feature and parameter extraction system 105. In some implementations, the display 145 may receive and present the decoded content from the stream decoder 110. The display 145 may include speakers or other types of audio output devices to output audio data in decoded media streams, as well as a video display to present video data in decoded media streams.

Once the decoded media content has been received by the stream receiver, the feature and parameter identifier can identify a set of features to generate using the decoded media stream. For example, the feature and parameter identifier can identify the features to generate using the type of content in the decoded media stream. If the decoded media stream includes video content, the feature and parameter identifier may identify features corresponding to video data that should be generated. Similarly, if the decoded media stream includes audio content, the feature and parameter identifier can identify features corresponding to audio data that should be generated. The features to be generated may also be identified at least based on a configuration setting (e.g., in a configuration file or setting provided via an external computing system or configured by a user). The configuration setting may specify one or more features to generate for various types of media content. In some implementations, the feature and parameter identifier may identify the specific media content in the decoded media content (e.g., the specific program, the specific channel, the specific song, the specific record, and the like), and identify the features to generate (e.g., from the configuration) using the identifier of the media content. For example, some configurations may perform different operations for different media programs that have different attributes (e.g., motion vectors may be generated for sporting events, while color and audio analysis may be performed for dramatic television shows). Attributes of media content can include various parameters of the decoded media stream, including a name of the media stream, a type of the media stream (e.g., video, audio, and the like), and the subject matter of the media stream, among any other attributes of the media stream.

Stored or accessed configuration settings may specify various types of features that are to be extracted for certain media content. In some implementations, the feature and parameter identifier may query or transmit a request to the machine learning processor 140, which may include the configuration settings for features to identify, including one or more formatting requirements for the media content once generated. The machine learning processor 140 may include a program or another type of user-configurable setting that specifies one or more features to generate. The feature and parameter identifier can query the machine learning processor 140 for these features and store the identifiers of the features to generate in the memory of the feature and parameter extraction system 105, for use by other components in performing the present techniques.

The feature and parameter identifier may identify different features to generate from video content and audio content. For example, for video data, the feature and parameter identifier may identify the types of features to generate as including one or more of a luma histogram, edge detection plots, object detection information (e.g., the presence of one or more objects in a video frame), object classification information (e.g., the classification of one or more objects in a video frame), spectral analysis information, motion vectors, as well as various parameters, such as minimum pixel value, maximum pixel value, or average pixel value. The parameters may also include parameters or properties of the video content, including resolution, bitrate, among other information. The features to generate for audio content may be identified as including, for example, gain information, frequency band histograms, other histograms for various parameters of the audio content, peak information (e.g., minimum, maximum, range values, and the like), tone information, pitch information, harmonic analysis information, a key of a song, or beats-per-minute in a song, among other audio features. The identified features to generate using the decoded media content may be provided to the feature and parameter generator, which may then generate the identified features to generate using the decoded media stream.

Once the features to generate have been identified, the feature and parameter generator can generate the set of features identified by the feature and parameter identifier using the decoded media stream. To do so, the feature and parameter generator can execute one or more processing algorithms over the decoded media stream (e.g., over one or more of the buffers that store the decoded media content). For example, to generate one or more edge detection plots, the feature and parameter generator may apply an edge detection technique to one or more frames of the decoded media content. Some example edge detection techniques include, but are not limited to, Canny edge detection, Deriche edge detection, differential edge detection, Sobel edge detection, Prewitt edge detection, and Roberts cross edge detection, among others. In some implementations, the feature and parameter generator can pre-process (e.g., normalization, color adjustments, noise reduction, and the like) the decoded media content prior to performing the processing algorithms to generate the features. Other algorithms may also be executed to generate additional information. For example, object detection models (e.g., neural networks, etc.) may be executed over the frames of video content to detect the presence of one or more objects. In some implementations, a number of objects (which may be detected as having a particular class or type) may be detected in one or more frames of the video information using such object detection models.

The features to generate for audio content may be identified as including, for example, gain information, frequency band histograms, other histograms for various parameters of the audio content, peak information (e.g., minimum, maximum, range values, and the like), tone information, pitch information, harmonic analysis information, a key of a song, or beats-per-minute in a song, among other audio features. The feature and parameter generator can also generate the features to include various color parameters of frames in the video stream. For example, the feature and parameter generator can determine a minimum or maximum pixel intensity value of a frame by comparing the color channel intensity values of each pixel in the frame to one another. Similarly, the feature and parameter generator can calculate an average pixel intensity value by summing the color intensity values of each pixel and dividing the sum by the total number of pixels. The feature and parameter generator can determine a median pixel intensity value by ranking the pixels by intensity value, and subsequently determine the median of the pixels according to the intensity. These operations may be performed for a single-color channel, or for combinations of color channels. For example, the feature and parameter generator may generate a parameter for a maximum pixel intensity value for the "red" color channel, or for a combination of the "red" and "blue" color channels. These parameters may be stored as part of the features by the feature and parameter generator.

The feature and parameter generator can also generate features for audio content in a content stream (e.g., an audio channel that is synchronized to video content, or one or more audio channels for stereo or surround sound, and the like). Some example features that may be generated from audio data can include, for example, gain information, tone information, pitch information, beat information (e.g., using one or more beat detection algorithms), frequency band histograms (e.g., calculated by performing a Fourier transform or an FFT algorithm over the audio signal), volume information, peak information (e.g., minimum audio signal value, maximum audio signal value, peak-to-peak difference, and the like), pitch information (e.g., by performing one or more pitch detection algorithms), a key of an audio sample (e.g., using a key finding algorithm), or the beats-per-minute of an audio sample (e.g., using a beat detection algorithm). The feature and parameter generator may generate the features to conform to a format corresponding to the machine learning processor 140. As described above, the feature and parameter identifier may query the machine learning processor 140, or another configuration setting, to identify the format in which the features should be generated. The feature and parameter generator can receive this formatting information, which may specify the structure and content of the data structures that make up the features and generate the features using the techniques described herein to conform to the appropriate structure. In this way, the feature and parameter generator can generate the features to be compatible with a variety of customizable machine learning models or processes. The feature and parameter generator may store the generated features in the appropriate data structures in the memory of the feature and parameter extraction system 105.

The feature and parameter provider can provide the set of features generated by the feature and parameter generator to the machine learning processor 140. For example, the feature and parameter provider may communicate the one or more features to the machine learning processor 140 as they are generated, or in a batch process once a predetermined number of features are generated. The feature and parameter provider may communicate the features to the machine learning processor via a suitable communication interface. In some implementations, the feature and parameter provider can communicate the features to the machine learning processor 140 by storing the set of features in a region of memory that is accessible by the machine learning processor 140. For example, the machine learning processor 140 may include one or more memory components. To provide the features to the machine learning processor, the feature and parameter provider can write the features to the memory of the machine learning processor 140, which can subsequently use the features when executing a machine learning model.

Machine learning models executed by the machine learning processor 140 can be any type of machine learning models, for example, facial detection or object detection models. Other processes may also be executed at the machine learning processor 140 using the features, such as fingerprinting of content, or content recommendation. For example, the machine learning processor 140 may execute one or more algorithms or machine learning models that can output content recommendations at least based on features of content that a user views over time. The machine learning processor 140 may be in communication with one or more other external computing devices via a network. The machine learning processor 140 can communicate the outputs of the machine learning models or other algorithms to the external computing devices via the network.

In some embodiments, the neural network can be a plurality of layers, where each layer is a plurality of neurons. In some embodiments, the layers are connected to each other and, during the process of inference, the layers are executed in a sequence starting with the input layer that acts on the input and ending with the final layer that generates the pixels of the scaled and multi-resolution enhanced image. In some embodiments, the frequency of a clock of the input layer is lesser than the frequency of a clock of the output layer. The difference in frequencies enables the multipliers and the adders in some layers to be re-used performing the calculation in phases, according to some embodiments. The difference in frequencies enables more operations to be performed and more complex neural networks to be implemented with the same hardware to generate the output or version, according to some embodiments.

The term "scale factor" can refer to a value by which a size and/or resolution of an image is increased, e.g., upscaled. For example, the scale factor can be a ratio between a scale of an original object and a scale of a new object that is a representation of the original object. The scale factor can enable proportional resizing of text, images, and/or user interface components, thereby providing the intended visual hierarchy and/or user experience. By properly applying the scale factor, the system 100 can adapt a visual content to different display sizes, facilitating improved rendering and improving the user satisfaction.

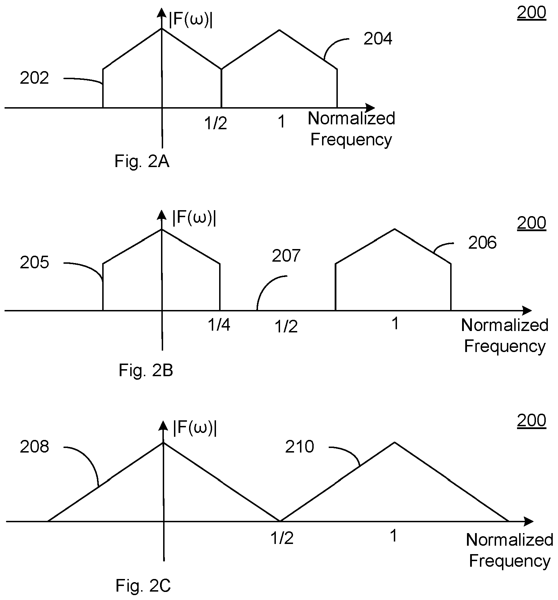

In some embodiments, the system 100 having a scale factor equal to two substantially doubles the number of weights (and therefore the number of multiplications) that can be processed compared with the number of the physical multipliers. In some embodiments, the system 100 having a scale factor equal to three, the number of weights for the neural network can be substantially tripled in comparison to the number of available multipliers. In some embodiments, a user can advantageously utilize the scalability of the system 100. For example, when the scale factor is greater, the number of phases that some multipliers can be involved in performing calculations is greater and/or the network that can be implemented has a greater size. In some embodiments, when the scale factor is greater, the spectrum that needs to be added is greater, as shown in FIG. 2B, and the size of the required network is greater. For example, when the scale factor is two, half of the spectrum needs to be filled in with new information; for the scale factor of three, two thirds of the spectrum needs to be added and the neural network performing the scaling by the factor of three is more complex (for example, the neural network can be greater) compared with the neural network required to perform a scaling by a factor of two. Because of scalability of the device, in some embodiments, an area of the device is less than one $mm^2$.

The area of the circuitry implemented on a semiconductor chip can refer to a physical space occupied by the electronic components and/or interconnections on the chip. This area can be referred to as the chip area or die size. The chip area is typically measured in $mm^2$ or $nm^2$, representing the two-dimensional measurement of the chip surface. The size of a chip can depend on the complexity and purpose of the chip. The chip area is influenced by several factors. For example, the number of transistors integrated onto the chip and/or the number of interconnects can impact the chip area. For example, the complexity and density of interconnects required to achieve the desired functionality can impact the chip area. Memory cells, such as cache or RAM, can impact the chip area. For example, the amount and type of memory integrated onto the chip can impact the chip size. Other components, such as specialized processing units, sensors, and/or analog circuits, can impact the chip area at least based on their complexity and integration specification.

In some embodiments, a total number of multipliers and adders can be equal or greater than 100. In some embodiments, when the scale factor changes from one integer value to another integer value, a relatively large array of entries (e.g., several hundred or more entries) that correspond to the total number of the multipliers and adders can be input into the system 100. In some embodiments, the processing block configured to implement the methods and systems described herein can include a pattern having a substantially regular array of multipliers and adders.

A processing block can refer to a functional unit within a larger computing system that is designed to perform a specific type of computation or a processing task. In some embodiments, the processing block can be implemented using specialized hardware or software components that are optimized for the specific type of processing required. In some embodiments, the processing block may, for example, include one or more processing elements, memory resources, and input/output interfaces. A processing block can offload specific processing tasks from the general-purpose computing system, thereby improving performance, efficiency, and scalability. The processing block may be designed to operate independently or in conjunction with other processing blocks within the computing system.

In some embodiments, the system 100 for scaling and super resolution can perform a simultaneous or concurrent generation of the pixels that are, for example, generated at the same time. In some embodiments, the system 100 for scaling and super resolution can perform an asynchronous generation of the pixels that are, for example, generated at different periods of time. For example, in some embodiments, when a scale factor of two is used, four pixels are generated for every input pixel, and the four pixels can be generated at the same time, or two of them can be generated at the same time, or only one of them can be generated. A display process used in a video system where the pixels occur in a scanning raster (e.g., a line after line, and on each line, a column after column), an efficient configuration can generate, for example, two pixels at a time, specifically two pixels that are on the same output line.

Typically, a system performing Machine Learning scaling in a conventional hardware includes a program that is stored into a program memory during program execution and each of a plurality of GPU cores executes the program. During such execution of the program in the conventional system, the input is taken from an SDRAM and the output is stored in the SDRAM. In the typical ML scaling system, the video input and the result of the processing are stored in the SDRAM. The architecture of the conventional system can occupy a relatively large semiconductor area footprint, consumes relatively more power, and contributes to a constraint of a memory bandwidth.

FIGS. 2A-2C illustrate a spectral representation 200 of scaling and super-resolution method performed by the system 100 according to some embodiments. In some embodiments, a variable $\omega$ can denote a frequency in radians per unit time, while axis x can represent a normalized frequency. Normalized frequency can be defined as the ratio of the actual frequency to the sampling frequency of a signal 202, 204 being analyzed. The magnitude of a Fourier transform, denoted as $|F(\omega)|$, for the signal 202, 204 at a given frequency $\omega$ can represent the energy in the signal that is present at the frequency $\omega$. In some embodiments, a signal can be sampled with a sampling period that can be represented by the following formula $T_s=2*\pi/\omega_0$, where $T_s=2*\pi$ for a normalized sampling frequency.

An upscaled image can refer to an image that has been increased in size and/or resolution using a scale factor. Upscaling can include applying algorithms or techniques to increase the dimensions of the original image. The process of upscaling an image can involve adding new pixels at least based on the existing pixel information in the original image. Various algorithms can be used to estimate the values of the new pixels. In some embodiments, by using a scale factor greater than one, the dimensions of the original image can be multiplied, resulting in a larger image. For example, if the original image is 100 pixels wide and a scale factor of two is applied, the upscaled image will be 200 pixels wide. In some embodiments, the algorithms used in the upscaling process can create a plausible representation of the additional pixels at least based on the existing pixels. The upscaled images may allow adaptation of images to larger screens, higher-resolution displays, or printing at larger sizes while reducing distortion and maintaining a visually acceptable level of quality.

Upscaled audio refers to the process of increasing the quality, resolution, and/or fidelity of an audio signal using various techniques or algorithms. The upscaling of audio may include improving the audio content to achieve a higher level of detail, clarity, or spatial representation beyond the original recording or source. The upscaling of audio can be performed through different methods, for example, upsampling, spatial upscaling, signal processing algorithms, and/or converting to high resolution audio can be used to upscale the audio.

In some embodiments, the upsampling can increase the sample rate of the audio signal by inserting additional data points between the existing samples. By adding more samples, the audio resolution can be improved, resulting in a smoother representation of the waveform. In some embodiments, the spatial upscaling expands the soundstage or creates a more immersive audio experience. The spatial upscaling may involve techniques such as virtual surround sound, binaural audio, or upmixing algorithms that analyze the original audio content and generate additional audio channels or spatial cues.

In some embodiments, the signal processing algorithms can include digital signal processing (DSP) techniques that can be employed to improve specific aspects of the audio signal. The signal processing algorithms may include noise reduction, equalization, dynamic range compression, or improvement of specific frequency ranges to improve the audio quality. In some embodiments, the high-resolution audio can refer to the process of converting lower-resolution audio formats (such as MP3) to higher-resolution formats like Free Lossless Audio Codec (FLAC) or Waveform Audio (WAV) file formats. Such conversion may allow compatibility with high-resolution audio systems that can benefit from the extended frequency range and dynamic range. In some embodiments, the upscaled audio can be used in applications such as music production, post-production, audio restoration, home theater systems, and audio streaming services, providing an improved and immersive listening experience for the audience.

As shown in FIG. 2A, for the signal 202, 204 sampled by a clock having a normalized frequency of one (that can, for example, correspond to a sampling rate) the maximum frequency in the spectrum that may be represented in the input signal 202 can be 1/2, according to some embodiments. When the signal 202, 204 having an input resolution is displayed on a physical display 145, the display 145 can output a number of lines and columns that are substantially equal to the number of signal samples 202, 204 vertically and horizontally, respectively, where the frequencies in the range of 0 to 1/2 can be correctly reproduced on the display. In some embodiments, a source video size and a display size can correspond to each other. For example, the source can have a 720p class resolution (1280x720 pixels) and the display can have the 720p class resolution (1280x720 pixels). For example, the source resolution can be the 1080p class (1920x1080 pixels) and the display resolution can be the 1080p class (1920x1080 pixels). In some embodiments, for a source resolution having the 720p class and for the display resolution of the 720p class, in order to, for example, save a bitstream bandwidth, the 1280x720 pixels of the 720p class source resolution can be encoded as 960x720 pixels. To be properly displayed, such encoded signal is upscaled to 1280x720 pixels.

In some embodiments, when the same video signal 202, 204 is displayed on a physical display 145 that has twice the number of lines and twice the number of pixels per line (in comparison to the input resolution) the signal samples 202, 204 need to be generated by a sampling process with a factor of two. If a linear scaling process is involved, a signal 205, 206 can be created having a spectrum as illustrated in FIG. 2B. Replicas of the base spectrum for the signals 205, 206 are further apart where the lower half of the spectrum being populated with the previous full spectrum of the input signal 205, specifically in a range between 0 and 1/4 in a normalized frequency. The upper half in a range between 1/4 and 1/2 (the range generally denoted as 207) is missing according to the information theory concepts. Such signal 205, 206 can be displayed on a physical display twice the resolution because there is one sample for each physical pixel; however, the signal 205, 206 will look "soft" and unpleasant to the eye. In some embodiments, the system 100 addresses this disadvantage of linear scaling by adding information in the frequency range between 1/4 and 1/2 by creating a signal 208 that has a spectrum illustrated in FIG. 2C. In some embodiments, the system 100 offers the viewer the perception of an increased video resolution even though the added information may be different than what was in the initial signal 205, 206. For example, if the input signal has a transition from a minimum value to a maximum value over a range of two pixels, after the linear scaling there can be a transition from the minimum to the maximum values in a range of four pixels. By using the system 100, the transition can be over two pixels, giving the human eye the same level of perception relative to the resolution of the display, according to some embodiments. For example, the additional information can be added by providing examples of pairs of signals as an input (for example, 205, 206) and a desired output (for example, 208, 210), where transitions over two pixels in the input 205, 206 can be associated with transitions over two pixels in the output 208, 210. In some embodiments, the neural network training process can "learn" the above-described association, and when network is applied to the input signal 205, 206 in the process of inference or determination, a pattern of the transition over two pixels can be detected and the output signal 208, 210 can be set to the transition over two pixels in accordance with the pattern that was "learned" in the process of training the neural network.

In some embodiments, the learning can include deriving high probability corresponding to a likelihood that, when a given input 205, 206 is detected by the system 100, the desired counterpart signal 208, 210 is the signal that is associated with as input 205, 206 to the training set. In some embodiments, the neural network can include a statistical model that is executed at least based on the neural network structure and/or the weights and biases that output from the process of training.

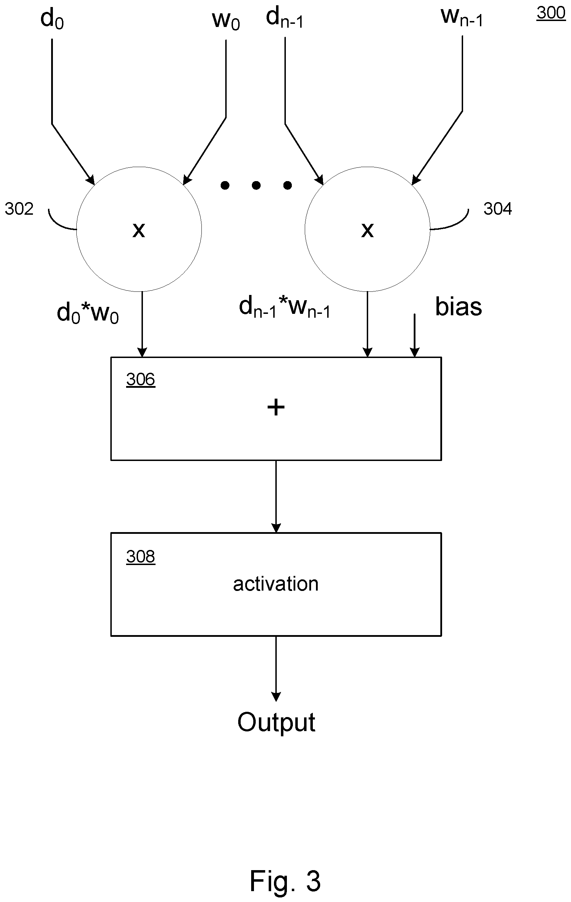

FIG. 3 illustrates the structure of a neural network 300 having one or more layers of neurons 302, 304 where each layer includes a set of n multipliers having two inputs per each neuron 302, 304, according to some embodiments. For example, the neuron 302 can include $d_0$ and $w_0$ multipliers; the neuron 304 can include $d_{n-1}$ and $w_{n-1}$ multipliers. In some embodiments, the neural network 300 can include an adder 306 that adds a constant "bias" and the n results of (i) the multiplication of $d_0$ and $w_0$ and (ii) the multiplication of $d_{n-1}$ and $w_{n-1}$. In some embodiments, the neural network 300 can include a final block 308 implementing an activation function. The activation function 308 can be a non-linear function, for example, such function can be in a form of the equations presented in the formula (5), according to some embodiments. In some embodiments, the neural network 300 combines the n number of weights that characterize the neurons 302, 304 with the n samples of the input data and with the bias that is associated with the neurons 302, 304.

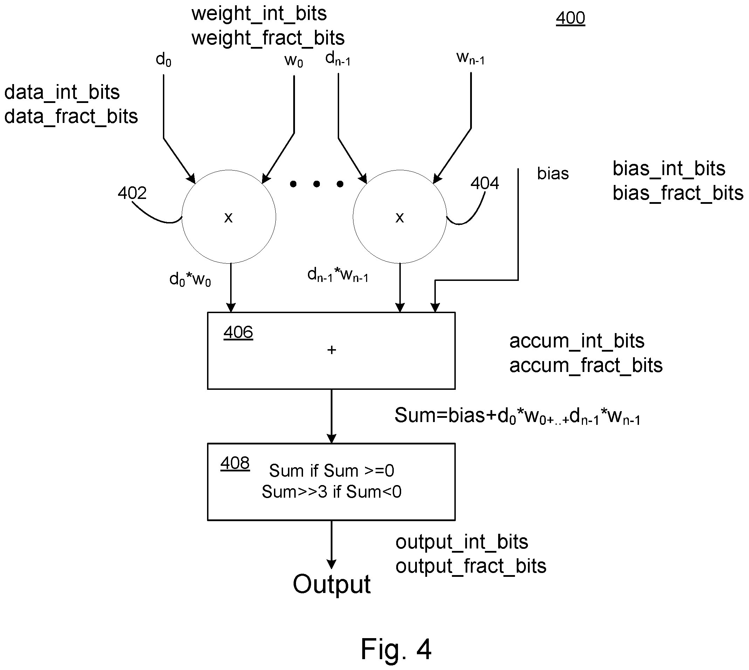

FIG. 4 illustrates a neural network 400 showing a graphic representation of a bit resolution where a plurality of elements is involved in calculation that neurons 402, 404 perform, according to some embodiments. In some embodiments, a data input (generally denoted as data_in), weights and a bias, an accumulated sum 406 (generally denoted as "accum"), and output have a bit precision for an integer part and a fractional part. For example, the input data $d_0$ has data_int_bits for the integer part and data_fract_bits for the fractional part. For example, the weight $w_0$ has weight_int_bits for the integer part and weight_fract_bits for the fractional part. For example, the bias has bias_int_bits for the integer part and bias_fract_bits for the fractional part. For example, the accumulated sum has accum_int_bits for the integer part and accum_fract_bits for the fractional part. An intermediary output sum of the adder 406 can be equal to addition of bias and respective multiplications of $d_0$ and $w_0$, $d_{n-1}$ and $w_{n-1}$ as well as multiplications of data inputs d and weights w corresponding to neurons disposed between the neurons 402 and 404. A block 408 illustrates an example of the activation function that can be described as, e.g., a sum of the results received from the previous operation at block 406 if the sum is equal or greater than zero and a sum right shifted three binary places (e.g., divided by eight) if the sum is lesser than zero. In some embodiments, the activation function can be represented by a function $f(x) = x$ if x is greater than or equal than zero and $f(x) = x/8$ if x is less than zero. A choice of the precision numbers is important for a successful implementation of the system 100: for example, in some embodiments, the precision needs to be large enough to avoid overflow and underflow, and the precision needs to be small enough to be practical for implementation of the neural network 400.

Typically, in a forward pass through the network, each layer computes its output at least based on the input it receives. Typically, the calculations can start from the beginning at each layer, even if some of the computations have already been performed in previous layers or for previous images. The redundant computation can be computationally expensive in deep networks with numerous layers and large input datasets. Computational reuse addresses inefficiency of the redundant computation by reusing intermediate computation results. In some embodiments, instead of recomputing the same calculations, the intermediate results obtained from previous layers or images are stored and reused. For example, the multipliers of the neural network can be reusable. The reuse can be achieved, for example, by storing the outputs of certain layers or specific computations in memory and retrieving them when needed. By reusing computations, the computational workload is reduced, resulting in improved efficiency. For example, computation reuse can accelerate the image classification process, making it more feasible for real-time or near real-time applications and/or resource-limited devices. Computational reuse can also facilitate mitigation of memory constraints by reducing storage of and access to redundant information. To implement computational reuse, intermediate results and memory allocation can be managed through techniques such as caching, memorization, and/or storing feature maps to store and retrieve the computations used for computational reuse.

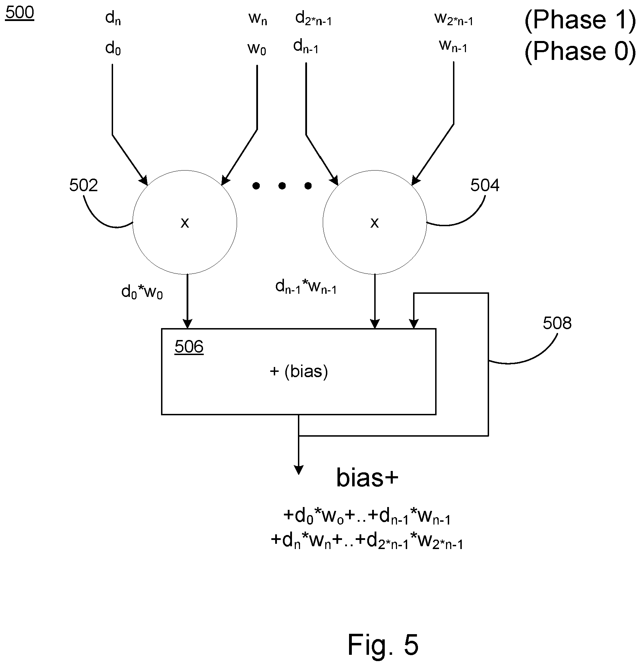

FIG. 5 illustrates a neural network 500 having a plurality of phases or epochs (e.g., a phase 0 and a phase 1), according to some embodiments. The phase can represent a complete pass through the entire training dataset during the training process of a neural network. In each phase, the neural network parameters (for example, weights and biases) can be updated at least based on the computed errors and/or optimization algorithm (such as gradient descent) to improve performance of the machine learning model. The number of phases can be determined in advance as a hyperparameter, and such number can indicate how many times the training process can iterate over the entire dataset.

In some embodiments, the phase 0 and phase 1 can be used in performing the calculations involved in neurons 502, 504. The phase can correspond to the number of times that each multiplier in the neuron can run to generate one output. For example, in the neural network 500, the neurons 502, 504 can run the first phase 0 and the second phase 1. The neural network 500 can include a multi-rate processing block where the neurons 502, 504 belonging to the layers that are close to the inputs (early layers) are not required to provide a result as often as the neurons belonging to the layers that are close to the output (late layers), according to some embodiments. For example, the system 100 can run all layers at the same processing rate (that can, e.g., correspond to the output pixel rate), and such configuration can allow the multipliers generally denoted as $d_0 * w_0$ through $d_{n-1} * w_{n-1}$ involved in the early layers to be re-used. For example, as shown in FIG. 4, the neural network 400 having the neurons 402, 404 involved in the early layer of the neural network 400 performing a scaling by a factor of two, for the duration of time when one output of the neural network 400 is generated, there is enough time to perform a two-phase processing, according to some embodiments. For example, as shown in FIG. 5, the phase 0 where the data having an index 0 through n-1 can be multiplied with the weights having an index 0 through n-1, can be followed by the phase 1 where the data having indices n through 2*n-1 is multiplied by the same multipliers with the weights having indices n through 2*n-1; the bias is added to generate the output result. An arrow 508 generally depicts such iteration of using the same multipliers in the phase 1 that were used in the phase 0. In some embodiments, an accumulator 506 receives the partial results of phase 0 that are fed back so that the phase 1 results can be included in the subsequent processing block. In some embodiments, each neuron can have its own number of the phases that the neuron can execute. In some embodiments, having more than one phase for data processing can enhance the scaling and super resolution that can improve utilization of the hardware. However, in some embodiments of the system 100, there can be no layer that is run in more than one phase.

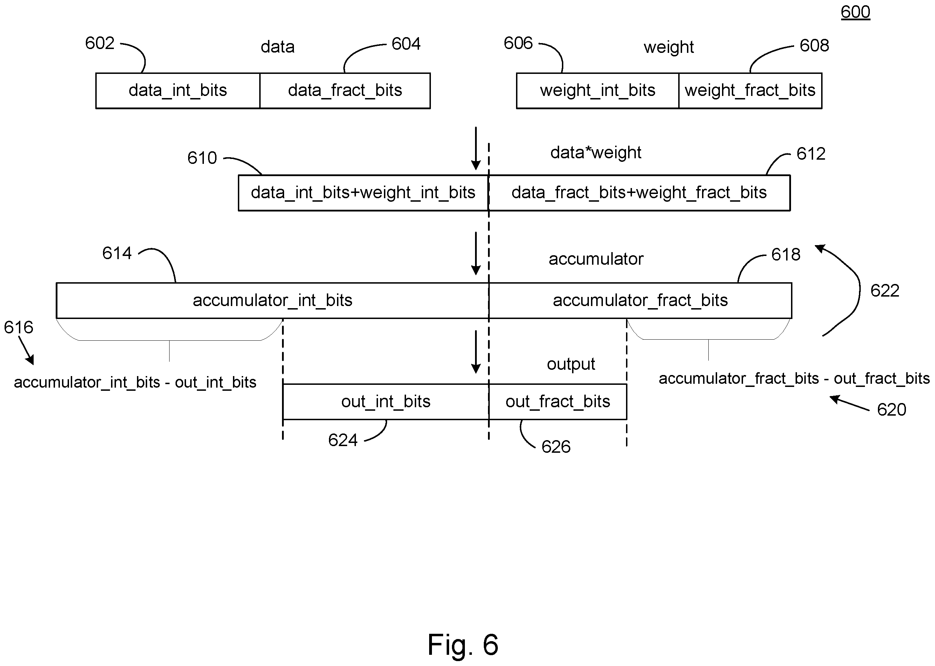

FIG. 6 is a diagram illustrating the process 600 of handling precision bits (or bits of precision), according to some embodiments. In some embodiments, a data input, weights and a bias, an accumulator, and an output have a bit precision for an integer part and a fractional part. In some embodiments, bits on a left side from a bit point are integer bits and bits on a right side from the bit point are fractional bits. For example, the input data has data_int_bits (602) for the integer part and data_fract_bits (604) for the fractional part. For example, the weight has weight_int_bits (606) for the integer part and weight_fract_bits (608) for the fractional part. For example, the multiplier (generally denoted as data*weight) has the integer part 610 that includes a sum of data_int_bits (602) and weight_int_bits (606). For example, the multiplier data*weight has the fractional part 612 that includes a sum of data_fract_bits (604) and weight_fract_bits (608). In some embodiments, an initial value of the accumulator can be configured as the value of the bias where the value of the bias is significantly lower than a sum of the data_fract_bits (604) and the weight_fract_bits (608) subtracted by the bias_fract_bits. In some embodiments, the accumulator has accumulator_int_bits (614) for the integer part and accumulator_fract_bits (618) for the fractional part. In some embodiments, the output has output_int_bits (624) for the integer part and output_fract_bits (626) for the fractional part.

In some embodiments, choosing the bit precision can facilitate a correct functioning of the neural networks 300, 400, 500 of the system 100. For example, if the precision is not managed correctly, the precision can grow quickly across the plurality of the layers of the neural networks 300, 400, 500. In some embodiments, to manage the precision, the process 600 can be implemented. For example, when the number of fractional bits of the output generally denoted as out_fract_bits is determined (out_fract_bits corresponds to a position of a fractional bit point), a bias precision can be adjusted prior to being added to the output such that the decimal point of the bias and the result of the multiplication are aligned. In some embodiments, the entire register size can be a summation of out_int_bits 624 and out_fract_bits 626. In some embodiments, the out_fract_bits 626 provides a number of the bits that are fractional (e.g., to the right of the bit point) and the effective location of the fractional bit point.

An arrow 622 generally indicates that the accumulator has a larger number of bits compared to the final output from the neuron. In some embodiments, a difference 616 (e.g., a subtraction of out_int_bits 624 from the accumulator_int_bits 614) determines a maximum clip level above which it is assumed that there is no substantially useful information. In some embodiments, a difference 620 (e.g., a subtraction of out_fract_bits 626 from the accumulator_fract_bits 618) determines a fractional resolution that is to be maintained, below which it is assumed that there is no substantially useful information. In some embodiments, the arrow 622 indicates that a final value of an accumulator is determined by including multiple computation inputs over potentially multiple phases. Each new part of the computation is accumulated (e.g., added to) the previous partial result, and the arrow 622 indicates that the current partial output of the accumulator can be passed back to the input for the next phase.

In some embodiments, to manage the precision of the neural network 300, 400, 500, the amplitude or magnitude of the output signals generated by the neural network 300, 400, 500 is decreased or dampened. In some embodiments, to dampen the output of a neural network 300, 400, 500, a choice of activation functions, a batch normalization, a dropout, and/or a scaling can be used. For example, the activation functions such as sigmoid or hyperbolic tangent can compress the output signal into a smaller range. For example, the batch normalization can be used for reducing the variance of the output signals in deep neural networks. In some embodiments, the dropout can be used as a regularization method when some neurons are randomly dropped out during training, the dropout can reduce overfitting and enhance the generalization performance of the network. In some embodiments, the scaling of the output of the neural networks 300, 400, 500 can be used to dampen the signal. In some embodiments, during the scaling of the output, the output can be multiplied by a scaling factor such as a constant or a learned parameter.

In some embodiments, when the out_int_bits (624) is decided, the value of out_int_bits (624) is subtracted from the value of the accumulator_int_bits (614). In some embodiments, the difference 616 between the accumulator_int_bits (614) and the out_int_bits (624) can be eliminated by dampening the output. In some embodiments, when the out_fract_bits (626) is decided, the value of out_fract_bits (626) is subtracted from the value of the accumulator_fract_bits (618). In some embodiments, the difference 620 between the accumulator_fract_bits (618) and the out_fract_bits (626) can be eliminated by dropping the difference 620.

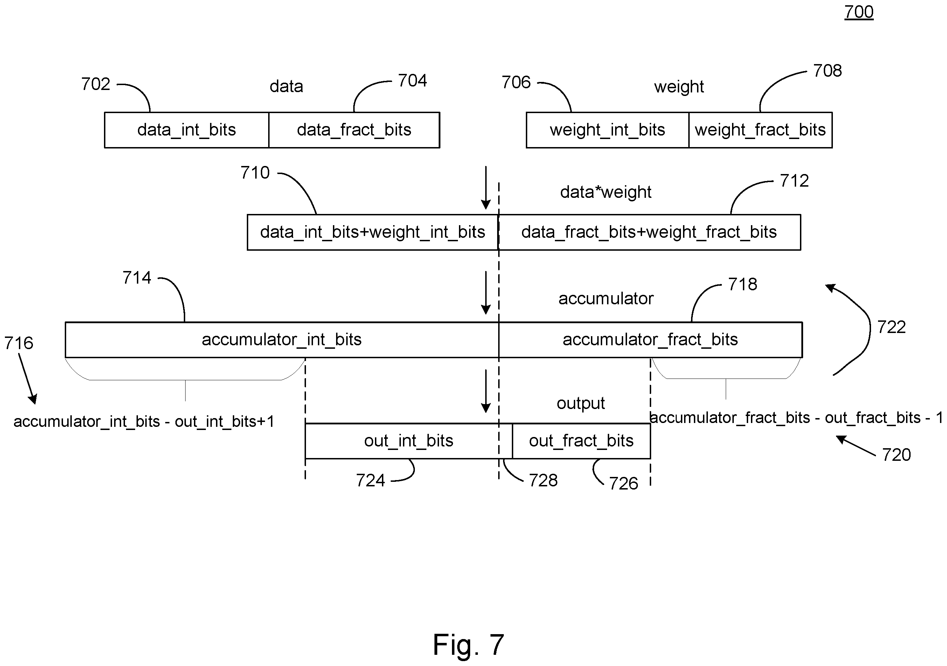

FIG. 7 is a diagram illustrating the process 700 of pre-scaling weights and biases, according to some embodiments. In some embodiments, a data input, weights and a bias, an accumulator, and an output have a bit precision for an integer part and a fractional part. For example, the input data has data_int_bits (702) for the integer part and data_fract_bits (704) for the fractional part. For example, the weight has weight_int_bits (706) for the integer part and weight_fract_bits (708) for the fractional part. For example, the multiplier generally denoted as data*weight has the integer part 710 that includes a sum of data_int_bits (702) and weight_int_bits (706). For example, the multiplier data*weight has the fractional part 712 that includes a sum of data_fract_bits (704) and weight_fract_bits (708). In some embodiments, an initial value of the accumulator can be configured as the value of the bias where the value of the bias is significantly lower than a sum of the data_fract_bits (704) and the weight_fract_bits (708) subtracted by the bias_fract_bits. In some embodiments, the accumulator has accumulator_int_bits (714) for the integer part and accumulator_fract_bits (718) for the fractional part. In some embodiments, the output has output_int_bits (724) for the integer part and output_fract_bits (726) for the fractional part.

Floating-point adders and multipliers are arithmetic units used in digital signal processing and other computational systems to perform addition and multiplication operations on floating-point numbers. Floating-point numbers can be a representation of real numbers; the floating-point numbers can consist of a sign bit, an exponent, and a significand (also known as the mantissa). The exponent represents the scaling factor, while the significand holds the fractional part of the number. A floating-point adder is responsible for adding two floating-point numbers together. The floating-point adder can take two input operands and produce a sum as the output. The operands need to be aligned in terms of their exponents before the addition operation can be performed. Such alignment ensures that the numbers have the same scale. The adder can add the significands of the operands and adjusts the result, if necessary, to maintain the proper exponent. A floating-point multiplier can perform the multiplication operation on two floating-point numbers. The floating-point multiplier can take two input operands, align their exponents, and multiply their significands together. The resulting significand is normalized, and the exponents can be adjusted accordingly to produce the final product.

Fixed-point (or fixed precision) adders and multipliers are arithmetic units used in digital signal processing and other computational systems to perform addition and multiplication operations on fixed-point numbers. The fixed-point numbers can represent real numbers with a fixed number of digits or bits for the integer and fractional parts. The fixed-point numbers are typically used for accurate fractional representation, where the range of values can be known and limited. A fixed-point adder can be a circuit or algorithm designed to perform addition operations on fixed-point numbers. It can take two fixed-point numbers as inputs and produce their sum as an output. The adder can consider the bit positions of the integer and fractional parts and properly align them during the addition. A fixed-point multiplier is a circuit or algorithm used to perform multiplication operations on fixed-point numbers. The multiplier can take two fixed-point numbers as inputs and produce their product as an output. The multiplication process can include multiplying the integer and fractional parts separately and/or properly aligning the results to obtain the final product.

Both fixed-point and floating-point adders and multipliers can be implemented using hardware circuits or software algorithms. The complexity of the circuits or algorithms depends on the precision required for the fixed-point representation and the range of values to be handled. In some embodiments, converting neural network weights and biases from the floating point to the fixed point can be implemented. The method involves analyzing a dynamic range of the weights and biases to determine an appropriate fixed-point representation. A scaling factor can be determined to maintain sufficient precision while covering the entire range of values. The weights and biases can be transformed to the fixed-point representation by multiplying them with the scaling factor and rounding to the nearest integer. An impact of the conversion on the network performance can be analyzed, and optimization techniques can be applied to minimize a loss of accuracy that can occur due to the conversion of the weights and biases from the floating point to the fixed point.

In some embodiments, the range of the weights and biases that result after network training may be unknown. In some embodiments, the neurons having floating point processing units can be implemented. Such method may be expensive in terms of implementation area, and it may consume additional power. Fixing the allowed range of weights and biases can be more economical in terms of implementation area and power. However, the fixed range can negatively affect efficiency of the training process and quality of the neural network 300, 400, 500. A bit-shift method can be used in some embodiments, where a bit-shift value is determined at the output of each neuron. A bit-shift refers to the operation of shifting the bits of a binary number to the left or right by a certain number of positions. For example, in some embodiments, instead of a single fixed precision for the weights and biases, a set of precisions can be allowed such that if the weights and biases are larger than the expected range, the weights and biases can be scaled back by performing a binary right-shift. In some embodiments, the bit-shift method can facilitate data compression or quantization by diminishing the precision or bit-depth of numerical values. For example, right-shifting the bits of a floating-point number allows reducing the accuracy of the floating-point number and rendering it more compact and memory-efficient. The method of bit-shifting can be applied in models that benefit from reduced memory usage and/or expedited computations. The bit-shift operations can be used in feature extraction techniques. By shifting the bits of input data representations, specific patterns or properties of the data can be emphasized or diminished. For example, the bit-shifting method can facilitate improvement of targeted features or mitigation of noise within the data.

In some embodiments, if the weights and biases are small and the largest weight and/or bias for a layer does not reach the limit of the range that is allocated for the weights and biases, the weights and biases can be binary left-shifted and a least significant bit will be set to the fixed-point representation to increase the precision of conversion from the floating point as the bits come out of a ML model. In some embodiments, such a configuration of the neural network 300, 400, 500 provides a countable number of alternative locations of the binary point for the fixed precision neural processing elements. In some embodiments, such configuration is more flexible and provides a better performance than a fixed-point implementation, at the same time such configuration can be not as costly as a floating-point implementation.

In some embodiments, to pre-scale weights and biases, the process 700 can be implemented. For example, when the number of fractional bits of the output generally denoted as out_fract_bits is determined (out_fract_bits corresponds to a position of a fractional bit point), a bias precision can be adjusted prior to being added to the output such that the decimal point of the bias and the result of the multiplication are aligned. In some embodiments, the entire register size can be a summation of out_int_bits 724 and out_fract_bits 726. In some embodiments, the out_fract_bits 726 provides a number of the bits that are fractional (e.g., to the right of the bit point) and the effective location of the fractional bit point.

An arrow 722 generally indicates that the accumulator has a larger number of bits compared to the final output from the neuron. In some embodiments, a difference 716 (e.g., a difference between the accumulator_int_bits (714) and the sum of out_int_bits (724) and the output portion 728 of the output) determines a maximum clip level above which it is assumed that there is no substantially useful information. In some embodiments, a difference 720 (e.g., a difference between the accumulator_fract_bits 718 and the result of the subtraction of the output portion 728 (corresponding to one bit in FIG. 7) from the out_fract_bits 726) determines a fractional resolution that is to be maintained, below which, it is assumed that there is no substantially useful information. In some embodiments, the arrow 722 indicates that a final value of an accumulator is determined by including multiple computation inputs over potentially multiple phases. Each new part of the computation is accumulated (e.g., added to) the previous partial result, and the arrow 722 indicates that the current partial output of the accumulator can be passed back to the input for the next phase.

In some embodiments, to manage the precision of the neural network 300, 400, 500, the amplitude or magnitude of the output signals generated by the neural network 300, 400, 500 is decreased or dampened. In some embodiments, to dampen the output of a neural network 300, 400, 500, a choice of activation functions, a batch normalization, a dropout, and/or a scaling can be utilized as described above.

In some embodiments, the system 100 can select an optimal value for output integer bits out_int_bits (724) when representing the neural network 300, 400, 500 to avoid or substantially reduce an overflow of the neural network 300, 400, 500. The "overflow" refers to a scenario where the values in the neural network computations become too large to be accurately represented using the available data types. The overflow can cause numerical instability, loss of precision, and/or degrade the performance of the neural network 300, 400, 500. In some embodiments, an optimal value of the integer bits out_int_bits (724) can be selected to be a minimum number of bits that can represent the range of values required for the neural network 300, 400, 500 to achieve a desired performance of the neural network 300, 400, 500. The optimal number of integer bits out_int_bits (724) for representing the neural network 300, 400, 500 can be determined through various methods such as a dynamic range analysis, a quantization-aware training, or an automated bit-width optimization.

In some embodiments, the system 100 can select an optimal value for the output fractional bits out_fract_bits (726) when representing the neural network 300, 400, 500 to avoid or substantially reduce an underflow of the neural network 300, 400, 500. The "underflow" refers to a scenario where the values in the neural network computations become too small to be accurately represented using the available data types. The underflow can be associated with unnecessary quantization or when small values are represented using limited precision data types, such as fixed-point or floating-point numbers. For example, the relatively small values may be lost during calculations, resulting in inaccurate predictions and reduced performance of the neural network 300, 400, 500. In some embodiments, to avoid or substantially reduce underflowing of the neural network 300, 400, 500, the system 100 can select an optimal value of the fractional bits in output out_fract_bits (726). In some embodiments, the optimal number of the output fractional bits out_fract_bits (726) can be determined using an iterative process or at least based on the expected range of the input data.

FIG. 7 illustrates a scenario where the weights were too large to fit in the nominal range and the integer part of the weights was increased by a portion 728 of the output (corresponding to, for example, one bit as shown in FIG. 7), according to some embodiments. In some embodiments, when the out_int_bits (724) is decided (out_int_bits corresponds to a position of an integer bit point), a sum of the value of out_int_bits (724) and the portion 728 of the output is subtracted from the value of the accumulator_int_bits (714). In such configuration, the number of bits that are discarded from the accumulator is smaller by the portion 728 (corresponding to one bit in FIG. 7), allowing, e.g., the extra bit for the integer part and still have the desired out_fract_bits as expected. In some embodiments, the difference 716 between the accumulator_int_bits (714) and the sum of out_int_bits (724) and the output portion 728 of the output can be eliminated by dampening the output. In some embodiments, when the out_fract_bits (726) value is decided (out_fract_bits corresponds to a position of a fractional bit point), the value of out_fract_bits (726) subtracted by the portion 728 (corresponding to one bit in FIG. 7) is subtracted from the value of the accumulator_fract_bits (718). In some embodiments, the difference 720 between the accumulator_fract_bits (718) and the result of the subtraction of the output portion 728 (corresponding to one bit in FIG. 7) from the out_fract_bits (726) can be eliminated by dropping the difference 720.

In the opposite case (not shown) where the entire set of weights and biases for one neuron would not reach the allocated range, an extra portion (for example, one bit) of the fractional precision is allowed and the number of bits that are discarded from the accumulator is larger by the extra portion (for example, one bit) to account for the extra portion (e.g., one extra bit) of the fractional precision that was allowed and still result in the desired fractional bits in the output.

The term "memory bandwidth" refers to the amount of data that can be transferred within a given time period, for example, the higher limit of the rate for the data transfer between the memory module and the other components of the computer system. In some embodiments, the systems and methods of the present disclosure can use the initial bandwidth of the memory of the device for creating the scaled and super-resolution output. The initial bandwidth of the memory of a circuit can refer to the maximum amount of data that can be transferred between the memory and processing units of the circuit within a given time period. The initial bandwidth of the memory represents the peak data transfer rate that can be achieved by the memory system when the circuit is first powered on and the memory is accessed for the first time. The initial bandwidth of the memory can be impacted by several factors, including the memory architecture, memory type, memory frequency, bus width, and memory controller design.

In some embodiments, when a processing block is disabled, and the device is set in a mode wherein the device is loaded to a maximum limit of a bandwidth of a memory of the device, the device can continue to function without reaching the maximum limit of the bandwidth of the memory of the device when the processing block is enabled again. The maximum limit of the bandwidth of the memory refers to the upper limit of the amount of data that can be transferred between the memory and processing units of a computer system within a given time period. The maximum limit of the bandwidth of the memory is determined by several factors, including the memory architecture, memory type, memory frequency, bus width, and memory controller design. In some embodiments, when the features are computed, a user can run the neural network and an upsampled output is produced without requiring intermediate data to be transmitted to and from the DRAM. In some embodiments, the adjustable fixed point hardware network is more efficient than other methods used to achieve the scaled and/or super-resolution data, such as, for example, using a CPU or a GPU to perform the computation(s) which require reading and/or writing on the DRAM and receive instructions from the DRAM to execute operations. In some embodiments, when the DRAM bandwidth limit reaches maximum capacity and the system 100 executes processing of the neural network 300, 400, 500, the system 100 continues to operate and does not fail.

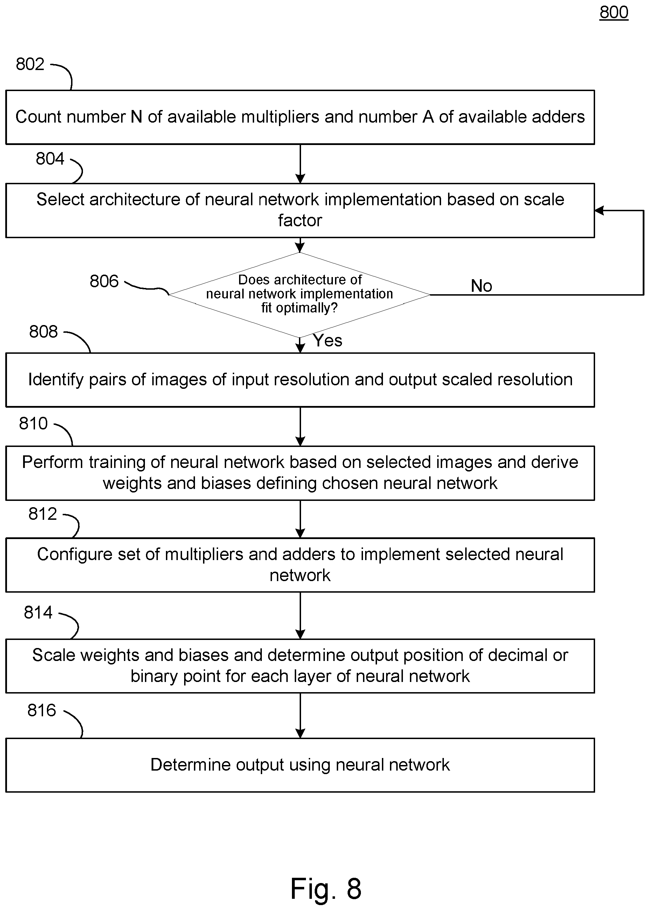

Referring now to FIG. 8, a flow diagram of a method 800 for scaling and super resolution is illustrated. The method 800 can be executed, performed, or otherwise carried out by the system 100, the computer system 900 described in connection with FIGS. 9A and 9B, or any other computing devices described herein. In brief overview, the method can implement an optimal neural network from an array of multipliers and adders such that an arbitrary scale factor and super-resolution is performed.

At step 802, the method 800 can determine a number N of available multipliers and a number A of available adders for a neural network.

At step 804, the method 800 can select a scale factor to be performed and an architecture of the neural network. At step 804, for each neuron, the number of phases that the neuron can have can be determined by the method 800. In some embodiments, to obtain a number of required multipliers, a number of multiplication operations can be divided by the number of phases.

At decision block 806, the method 800 can check if the number N of multipliers and the number A of adders are sufficient to implement the neural network selected at step 804. If coefficients of the chosen neural network exceed the limit of available numbers N or A, the method 800 can re-design the neural network, for example, to have a fewer number of layers. If coefficients of the chosen neural network align with or fit into the numbers N and A, the method 800 can determine the number of multiplications that are not being used to maximize the usage of the multipliers and attempt to increase the neural network complexity by adding more layers. In some embodiments, the method 800 can iterate step 804 until the complexity of the neural network cannot be increased anymore and the neural network still aligns with or fits into the N multipliers and A accumulators.

At step 808, the method 800 can select the data on which the neural network can be trained. At step 808, pairs of images are selected where a first element in the pair is an image at the input resolution and a second element of the pair is a desired scaled super-resolution image.

At step 810, the method 800 can perform the training of the selected network using the training data selected at step 808. In some embodiments, at the end of step 810, a set of weights and biases can be generated by the method 800. In some embodiments, the weights and biases can be, for example, floating point numbers. In some embodiments, the training process can be offline, e.g., not performed in real time.

At step 812, the method 800 can configure the multipliers and the adders to implement the neural network selected at step 804.

At step 814, the method 800 can configure the weights and the biases with the quantized versions of the weights and the biases derived at step 810. In some embodiments, at step 814, the method can select a version of the fixed precision of the output for each neuron to obtain an optimal fit by the weights and the biases to fit a precision allocated for each neuron.

At step 816, the method 800 can use the neural network to perform inferences or determine the output, according to some embodiments.

In some embodiments, the method 800 can scale the data (e.g., the image) and provide super-resolution data (e.g., the image) such that the scaled and super-resolution output is not stored in a dynamic random-access memory (DRAM). In some embodiments, the intermediary output of the neural network is not stored in the DRAM. For example, a circuitry of the system 100 where the method 800 is implemented can be a semiconductor device that is other than a central processing unit (CPU), a graphics processing unit (GPU), or a neural processing unit. When compared to scaling and/or super-resolution method(s) where the scaled and super-resolution output and/or the intermediate outputs are stored in CPU and/or GPU, the method 800 implemented by the system 100 is able to not store the scaled and super-resolution output and/or the intermediate outputs in the DRAM. For example, in some embodiments, the scaled and/or super-resolution output and/or the intermediate outputs can be computed "on-the-fly" and are not required to be written to the DRAM at various stages of the processing pipeline beyond the input to the system 100. In some embodiments, the intermediate results "fly" through the network, and the output is transmitted to the display device 145 (or to a next processing block depending on the system settings), where the intermediate results do not need to be stored in the DRAM. The method 800 implemented by the system 100 can achieve a substantial elimination or reduction of the exchange of the data with the DRAM for substantially the entire period of time when the signal passes through the neural network 300, 400, 500.

The following IEEE standard(s), including any draft versions of such standard(s), are hereby incorporated herein by reference in their entirety and are made part of the present disclosure for all purposes: IEEE 802.3, IEEE 802.11x, IEEE 802.11ad, IEEE 802.11ah, IEEE 802.11aj, IEEE 802.16 and 802.16a, and IEEE 802.11ac. Although this disclosure may reference aspects of these standard(s), the disclosure is in no way limited by these standard(s).

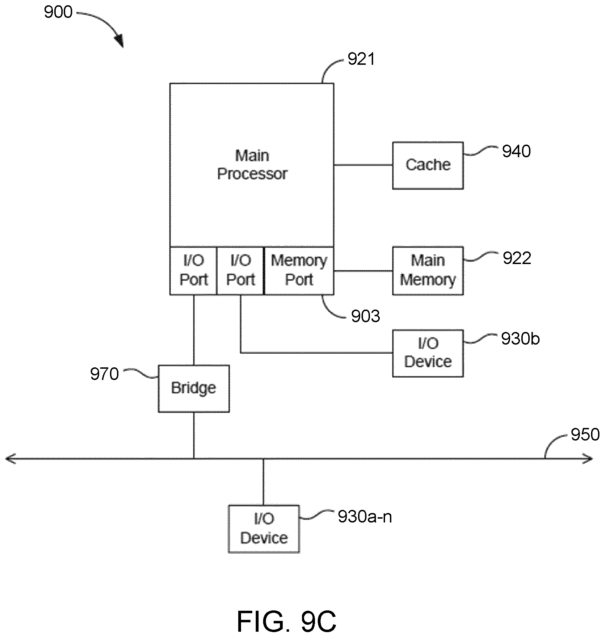

Having discussed specific embodiments of the present solution, it may be helpful to describe aspects of the operating environment as well as associated system components (e.g., hardware elements) in connection with the methods and systems described herein. Referring to FIG. 9A, an embodiment of a network environment is depicted. The network may include or be in communication with one or more storage area networks (SANs), security adapters, or Ethernet converged network adapters (CNAs). In brief overview, the network environment includes a wireless communication system that includes one or more access points 906, one or more wireless communication devices 902 and a network hardware component 992. The wireless communication devices 902 may, for example, include laptop computers 902, tablets 902, personal computers 902, wearable devices 902, vehicles 902 (e.g., automobiles, drones, smart vehicles, robotic units, and the like), video game consoles 902, cellular telephone devices 902, smart TV sets 902, Internet of Thing (IoT) devices 902, and any other electronic devices 902 capable of wireless communication. The details of an embodiment of wireless communication devices 902 and/or access point 906 are described in greater detail with reference to FIGS. 9B and 9C. The network environment can be an ad hoc network environment, an infrastructure wireless network environment, a wired network coupled to a wireless network, a subnet environment, or a combination of the foregoing, in one embodiment.

The access points (APs) 906 may be operably coupled to the network hardware 992 via local area network connections. The network hardware 992, which may include one or more routers, gateways, switches, bridges, modems, system controllers, appliances, and the like, may provide a local area network connection for the communication system. Each of the access points 906 may have an associated antenna or an antenna array to communicate with the wireless communication devices in its area. The wireless communication devices may register with a particular access point 906 to receive services from the communication system (e.g., via a SU-MIMO or MU-MIMO configuration). For direct connections (e.g., point-to-point communications), some wireless communication devices may communicate directly via an allocated channel and communications protocol. Some of the wireless communication devices 902 may be mobile or relatively static with respect to the access point 906.

In some embodiments, an access point 906 includes a device or module (including a combination of hardware and software) that allows wireless communication devices 902 to connect to a wired network using Wi-Fi or other standards. An access point 906 may sometimes be referred to as a wireless access point (WAP). An access point 906 may be configured, designed and/or built for operating in a wireless local area network (WLAN). An access point 906 may connect to a router (e.g., via a wired network) as a standalone device in some embodiments. In other embodiments, an access point 906 can be a component of a router. An access point 906 can provide multiple devices access to a network. An access point 906 may, for example, connect to a wired Ethernet connection and provide wireless connections using radio frequency links for other devices 902 to utilize that wired connection. An access point 906 may be built and/or configured to support a standard for sending and receiving data using one or more radio frequencies. Those standards and the frequencies they use may be defined by the IEEE (e.g., IEEE 802.11 standards). An access point 906 may be configured and/or used to support public Internet hotspots, and/or on an internal network, to extend the network's Wi-Fi signal range.

In some embodiments, the access points 906 may be used for in-home or in-building wireless networks (e.g., IEEE 802.11, Bluetooth, ZigBee, any other type of radio frequency-based network protocol and/or variations thereof). Each of the wireless communication devices 902 may include a built-in radio and/or be coupled to a radio. Such wireless communication devices 902 and/or access points 906 may operate in accordance with the various aspects of the disclosure as presented herein to enhance performance, reduce costs and/or size, and/or enhance broadband applications. Each wireless communication device 902 may have the capacity to function as a client node seeking access to resources (e.g., data, and connection to networked nodes such as servers) via one or more access points.

The network connections may include any type and/or form of network and may include any of the following: a point-to-point network, a broadcast network, a telecommunications network, a data communication network, or a computer network. The topology of the network may be a bus, star, or ring network topology. The network may be of any such network topology as known to those ordinarily skilled in the art and capable of supporting the operations described herein. In some embodiments, various types of data may be transmitted via different protocols. In other embodiments, the same types of data may be transmitted via different protocols.

The communications device(s) 902 and access point(s) 906 may be deployed as and/or executed on any type and form of computing device, such as a computer, network device, or appliance capable of communicating on any type and form of network and performing the operations described herein. FIGS. 9B and 9C depict block diagrams of a computing device 900 useful for practicing an embodiment of the wireless communication device 902 or access point 906. As shown in FIGS. 9B and 9C, each computing device 900 includes a central processing unit 921 and a main memory unit 922. As shown in FIG. 9B, a computing device 900 may include a storage device 928, an installation device 916, a network interface 918, an I/O controller 923, display devices 924a-901n, a keyboard 926 and a pointing device 927, such as a mouse. The storage device 928 may include, without limitation, an operating system and/or software. As shown in FIG. 9C, each computing device 900 may also include optional elements, such as a memory port 903, a bridge 970, one or more input/output devices 930a-930n (generally referred to using reference numeral 930), and a cache memory 940 in communication with the central processing unit 921.

"Circuitry" can refer to the interconnected arrangement of electronic components and pathways that allow the flow of electrical signals within a device, system, or application. In some embodiments, single-component circuitry can be an electronic component such as a resistor, capacitor, or transistor that performs a certain function within an electronic system. In some embodiments, multiple components working together in circuitry can include coordination of various electronic components. In some embodiments, the circuitry can include hardware components, such as integrated circuits, transistors, resistors, capacitors, and connectors, as well as combinations of hardware and software or firmware elements that can operate together to perform various functions. The multiple components can include separate components such as sensors, microcontrollers, memory modules, communication interfaces, or power management circuits, which are interconnected to form a functional system. For example, the circuitry can include microcontrollers or processors that execute software instructions to control the behavior of the hardware components. For example, the circuitry processors can run programs that enable the device or system to perform various tasks such as data processing and communication. The components may be physically not contained within the same device, for example, the components can be distributed across different devices connected through wired or wireless interfaces.

The central processing unit (CPU) 921 is any logic circuitry that responds to and processes instructions fetched from the main memory unit 922. In many embodiments, the central processing unit 921 is provided by a microprocessor unit, such as those manufactured by Intel Corporation of Mountain View, California; those manufactured by International Business Machines of White Plains, New York; or those manufactured by Advanced Micro Devices of Sunnyvale, California. The computing device 900 may be at least based on any of these processors or any other processor capable of operating as described herein. The CPU can be a programmable parallel processor.

Other programmable parallel processors can include a graphics processing unit (GPU) and/or a neural processor. The GPU is a programmable parallel processor that can perform complex computations for graphics rendering and general-purpose computing tasks. The GPU consists of processing cores interconnected through a high-bandwidth memory interface and a bus system, enabling efficient parallel processing. The processing core of the GPU can be equipped with dedicated arithmetic logic units and memory caches, allowing for simultaneous execution of multiple computational threads. To improve graphics rendering pipelines, the GPU can incorporate the following hardware components: texture units and rasterizers. The GPU can employ optimized algorithms and data parallelism techniques to accelerate computations, resulting in superior performance compared to a conventional CPU. The GPU can be programmable using graphics APIs and parallel computing frameworks, enabling scientific simulations, machine learning, and data analytics.

The neural processing unit or the neural processor (NP) can be a programmable parallel processor designed to efficiently process neural networks and accelerate artificial intelligence computations. The NP can comprise a plurality of processing elements interconnected through a high-speed network-on-chip, enabling effective distribution and synchronization of computations. Each processing element of the NP can include dedicated memory, arithmetic logic units, and/or control units, allowing parallel execution of multiple neural network layers or tasks. The NP can employ optimized algorithms and dataflow architectures to achieve high-performance computations, reducing latency and power consumption. The NP can incorporate hardware accelerators for common neural network operations, such as matrix multiplications and/or convolutions, enhancing processing efficiency. The NP can support a wide range of neural network models and is programmable through software interfaces, enabling flexibility in adapting to various AI applications.

Main memory unit 922 may be one or more memory chips capable of storing data and allowing any storage location to be accessed by the microprocessor 921, such as any type or variant of Static random-access memory (SRAM), Dynamic random-access memory (DRAM), Ferroelectric RAM (FRAM), NAND Flash, NOR Flash and Solid-State Drives (SSD). The main memory 922 may be at least based on any of the above-described memory chips, or any other available memory chips capable of operating as described herein. In the embodiment shown in FIG. 9B, the processor 921 communicates with main memory 922 via a system bus 950 (described in more detail below). FIG. 9C depicts an embodiment of a computing device 900 in which the processor communicates directly with main memory 922 via a memory port 903. For example, in FIG. 9C the main memory 922 may be DRAM.

FIG. 9C depicts an embodiment in which the main processor 921 communicates directly with cache memory 940 via a secondary bus, sometimes referred to as a backside bus. In other embodiments, the main processor 921 communicates with cache memory 940 using the system bus 950. Cache memory 940 typically has a faster response time than main memory 922 and is provided by, for example, SRAM, BSRAM, or EDRAM. In the embodiment shown in FIG. 9C, the processor 921 communicates with various I/O devices 930 via a local system bus 950. Various buses may be used to connect the central processing unit 921 to any of the I/O devices 930, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 924, the processor 921 may use an Advanced Graphics Port (AGP) to communicate with the display 924. FIG. 9C depicts an embodiment of a computer or computer system 900 in which the main processor 921 may communicate directly with I/O device 930b, for example via HYPERTRANSPORT, RAPIDIO, or INFINIBAND communications technology. FIG. 9C also depicts an embodiment in which local busses and direct communication are mixed: the processor 921 communicates with I/O device 930a using a local interconnect bus while communicating with I/O device 930b directly.

A wide variety of I/O devices 930a-930n may be present in the computing device 900. Input devices include keyboards, mice, trackpads, trackballs, microphones, dials, touch pads, touch screen, and drawing tablets. Output devices include video displays, speakers, inkjet printers, laser printers, projectors, and dye-sublimation printers. The I/O devices may be controlled by an I/O controller 923 as shown in FIG. 9B. The I/O controller may control one or more I/O devices such as a keyboard 926 and a pointing device 927, e.g., a mouse or optical pen. Furthermore, an I/O device may also provide storage and/or an installation medium 916 for the computing device 900. In still other embodiments, the computing device 900 may provide USB connections (not shown) to receive handheld USB storage devices such as the USB Flash Drive line of devices manufactured by Twintech Industry, Inc., of Los Alamitos, California.

Referring again to FIG. 9B, the computing device 900 may support any suitable installation device 916, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 900 may further include a storage device, such as one or more hard disk drives or redundant arrays of independent disks, for storing an operating system and other related software, and for storing application software programs such as any program or software 920 for implementing (e.g., software 920 configured and/or designed for) the systems and methods described herein. In some embodiments, any of the installation devices 916 could be used as the storage device. In some embodiments, the operating system and the software can be run from a bootable medium.

Furthermore, the computing device 900 may include a network interface 918 to interface to the network 904 through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 900 communicates with other computing devices 900 via any type and/or form of gateway or tunneling protocol such as Secure Socket Layer (SSL) or Transport Layer Security (TLS). The network interface 918 may include a built-in network adapter, network interface card, PCMCIA network card, card bus network adapter, wireless network adapter, USB network adapter, modem, or any other device suitable for interfacing with the computing device 900 to any type of network capable of communication and performing the operations described herein.

In some embodiments, the computing device 900 may include or be connected to one or more display devices 924a-924n. As such, any of the I/O devices 930a-930n and/or the I/O controller 923 may include any type and/or form of suitable hardware, software, or combination of hardware and software to support, enable or provide for the connection and use of the display device(s) 924a-924n by the computing device 900. For example, the computing device 900 may include any type and/or form of video adapter, video card, driver, and/or library to interface, communicate, connect, or otherwise use the display device(s) 924a-924n. In one embodiment, a video adapter may include multiple connectors to interface to the display device(s) 924a-924n. In other embodiments, the computing device 900 may include multiple video adapters, with each video adapter connected to the display device(s) 924a-924n. In some embodiments, any portion of the operating system of the computing device 900 may be configured for using multiple displays 924a-924n. One ordinarily skilled in the art will recognize and appreciate the various embodiments and ways that a computing device 900 may be configured to have one or more display devices 924a-924n.

In further embodiments, an I/O device 930 may be a bridge between the system bus 950 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a Serial Attached small computer system interface bus, a USB connection, or a HDMI bus.

A computing device or system 900 of the sort depicted in FIGS. 9B and 9C may operate under the control of an operating system, which controls scheduling of tasks and access to system resources. The computing device 900 can be running any operating system, such as any of the versions of the MICROSOFT WINDOWS operating systems, the different releases of the Unix and Linux operating systems, any version of the MAC OS for Apple computers, any embedded operating system, any real-time operating system, any open source operating system, any proprietary operating system, any operating systems for computing devices, or any other operating system capable of running on the computing device and performing the operations described herein. Typical operating systems include, but are not limited to, Android, produced by Google Inc.; WINDOWS 7 and 8, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system 900 can be any workstation, telephone, desktop computer, laptop or notebook computer, server, handheld computer, telephone or other portable telecommunications device, media playing device, a gaming system, computing device, or any other type and/or form of computing, telecommunications or media device that is capable of communication. The computer system 900 has sufficient processor power and memory capacity to perform the operations described herein.

In some embodiments, the computing device 900 may have different processors, operating systems, and input devices consistent with the device. For example, in one embodiment, the computing device 900 is a smart phone, mobile device, tablet or personal digital assistant. In still other embodiments, the computing device 900 is an Android-based device, an iPhone smart phone manufactured by Apple Computer of Cupertino, California, or a Blackberry or WebOS-based handheld device or smart phone, such as the devices manufactured by Research In Motion Limited. Moreover, the computing device 900 can be any workstation, desktop computer, laptop or notebook computer, server, handheld computer, telephone, any other computer, or other form of computing or telecommunications device that is capable of communication and that has sufficient processor power and memory capacity to perform the operations described herein. Aspects of the operating environments and components described above will become apparent in the context of the systems and methods disclosed herein.

It should be noted that certain passages of this disclosure can reference terms such as "first" and "second" in connection with devices signals, data, inputs, channels, and the like for purposes of identifying or differentiating one from another or from others. These terms are not intended to merely relate entities (e.g., a first input and a second input) temporally or according to a sequence, although in some cases, these entities can include such a relationship. Nor do these terms limit the number of possible entities (e.g., devices) that can operate within a system or environment.

It should be understood that the systems described above can provide multiple ones of any or each of those components. The systems and methods described above can be provided as one or more computer-readable programs or executable instructions, programmable circuits, or digital logic embodied on or in one or more articles of manufacture. The article of manufacture can be a floppy disk, a hard disk, a CD-ROM, a flash memory card, a PROM, a RAM, a ROM, ASIC, or a magnetic tape. In general, the computer-readable programs can be implemented in any programming language, such as LISP, PERL, C, C++, C#, PROLOG, or in any byte code language such as JAVA. The software programs or executable instructions can be stored on or in one or more articles of manufacture as object code.

While the foregoing written description of the methods and systems enables one of ordinary skill to make and use various embodiments of these methods and systems, those of ordinary skill will understand and appreciate the existence of variations, combinations, and equivalents of the specific embodiment, method, and examples herein. The present methods and systems should therefore not be limited by the above-described embodiments, methods, and examples, but by all embodiments and methods within the scope and spirit of the disclosure.

## Claims

1. A method comprising:

   receiving, by a device (105), a data stream comprising a media, the device comprising circuitry to upscale by a scale factor the media to a super resolution, the circuitry configured with a number of one or more multipliers and adders to implement one or more neurons of one or more layers of a neural network (300, 400, 500), the number of one or more multipliers and adders being determined based at least in part on the scale factor;
   determining, by the neural network (300, 400, 500) responsive to input of one or more data points to the neural network (300, 400, 500), a plurality of output data points corresponding to the one or more data points upscaled by the scale factor to the super resolution; and
   providing, by the device, as an output the super resolution of the media.

2. The method of claim 1, further comprising identifying, by the circuitry of the device, one or more features of the one or more data points from the data stream and providing the one or more features as input to the neural network (300, 400, 500).

3. The method of claim 1 or 2, further comprising determining, by the neural network (300, 400, 500), one or more features of the one or more data points and using the one or more features to determine the plurality of output data points.

4. The method of any of claims 1 to 3, wherein an output clock of at least one or more of the number of one or more multipliers operates at a higher rate than an input clock of the circuitry.

5. The method of claim 4, wherein the at least one or more of the number of one or more multipliers are re-useable, using the higher rate of the output clock than the input clock, to implement another neuron of the one or more neurons of the neural network (300, 400, 500).

6. The method of any of claims 1 to 5, comprising at least one of the following features:

   wherein the device is other than a central processing unit, a graphics processing unit, or a neural processing unit;
   wherein the media comprises a video.

7. The method of any of claims 1 to 6, wherein the circuitry for the neural network (300, 400, 500) uses fixed precision multipliers and adders to implement a neuron.

8. The method of any of claims 1 to 7, wherein the one or more layers of the neural network (300, 400, 500) comprises:

   a set of neurons and bits of precision corresponding to each neuron of the set of neurons; and
   a set of positions of a bit point in an output of each neuron,
   wherein each multiplier in the neuron is configured to run during at least one phase to generate the output.

9. The method of any of claims 1 to 8, comprising at least one of the following features:

   wherein a training process of the neural network (300, 400, 500) derives first weights and biases to configure each neuron and wherein second weights and biases having a floating point are converted to third weights and biases having a fixed point such that overflowing and underflowing of the each neuron is reduced;
   wherein a training process of the neural network (300, 400, 500) derives first weights and biases to configure each neuron and wherein second weights and biases having a floating point are converted to third weights and biases having a fixed point such that a range of the first weights and biases is increased;
   wherein a bit-shift value is determined at an output of the each neuron.

10. A circuitry comprising:

    a number of one or more multipliers and adders implementing one or more neurons of one or more layers of a neural network (300, 400, 500), the number of one or more multipliers and adders determined based at least in part on a scale factor for upscaling a media;
    wherein the circuitry is configured to upscale by the scale factor the media to a super resolution, and wherein the circuitry is configured to:

    receive a data stream;
    determine in response to input of one or more data points to the neural network (300, 400, 500), a plurality of output data points corresponding to the one or more data points upscaled by the scale factor to the super resolution; and
    provide as an output the super resolution of the media.

11. The circuitry of claim 10, wherein an area of the circuitry implemented on a semiconductor chip is less than one $mm^2$.

12. A system (100) comprising:

    a circuitry comprising:

    a number of one or more multipliers and adders implementing one or more neurons of one or more layers of a neural network (300, 400, 500), the number of one or more multipliers and adders determined based at least in part on a scale factor for upscaling a media;

    wherein the circuitry is configured to upscale by the scale factor the media to a super resolution, and wherein the circuitry is configured to:

    receive a data stream;

determine, in response to input of one or more data points the neural network (300, 400, 500), a plurality of output data points corresponding to the one or more data points upscaled by the scale factor to the super resolution; and

provide as an output the super resolution of the media.

13. The system (100) of claim 12, wherein an output clock of at least one or more of the number of one or more multipliers operates at a higher rate than an input clock of the circuitry.

14. The system (100) of claim 13, wherein the at least one or more of the number of one or more multipliers are re-useable, using the higher rate of the output clock than the input clock, to implement another neuron of the one or more neurons of the neural network (300, 400, 500).

15. The system (100) of any of claims 12 to 14, comprising at least one of the following features:

wherein the circuitry uses a memory bandwidth for creating the super resolution of the media without adding an additional capacity of the memory bandwidth;

wherein:

a processing block of the circuitry is configured to be disabled, and the circuitry is configured to be set in a mode wherein the circuitry is loaded to a limit of a bandwidth of a memory of the circuitry; and

the circuitry continues to function without reaching the limit of the bandwidth of the memory of the circuitry in response to the processing block of the circuitry being enabled;

wherein the circuitry is a semiconductor device other than a central processing unit, a graphics processing unit, or a neural processing unit.

Fig. 1

EP 4 517 647 A1

200

202

|F(ω)|

204

1/2    1    Normalized
Frequency

Fig. 2A

200

205

|F(ω)|

207

206

1/4    1/2    1    Normalized
Frequency

Fig. 2B

200

208

|F(ω)|

210

1/2    1    Normalized
Frequency

Fig. 2C

Fig. 3

Fig. 4

EP 4 517 647 A1

500

$d_n$ (Phase 1)
$d_0$ (Phase 0)

$w_n$ $d_{2*n-1}$
$w_0$ $d_{n-1}$

$w_{2*n-1}$
$w_{n-1}$

502 504

x x

$d_0*w_0$ $d_{n-1}*w_{n-1}$

508

506

+ (bias)

bias+

$+d_0*w_0+..+d_{n-1}*w_{n-1}$
$+d_n*w_n+..+d_{2*n-1}*w_{2*n-1}$

Fig. 5

EP 4 517 647 A1

33

602 — data — 604

| data_int_bits | data_fract_bits |
|---|---|

606 — weight — 608

| weight_int_bits | weight_fract_bits |
|---|---|

610 — data*weight — 612

| data_int_bits+weight_int_bits | data_fract_bits+weight_fract_bits |
|---|---|

614 — accumulator — 618

622

| accumulator_int_bits | accumulator_fract_bits |
|---|---|

616

accumulator_int_bits - out_int_bits

output

accumulator_fract_bits - out_fract_bits

| out_int_bits | out_fract_bits |
|---|---|

624 — 626

620

EP 4 517 647 A1

Fig. 6

Fig. 7

EP 4 517 647 A1

800

802

Count number N of available multipliers and number A of available adders

804

Select architecture of neural network implementation based on scale factor

806 — Does architecture of neural network implementation fit optimally?  No

808 — Yes

Identify pairs of images of input resolution and output scaled resolution

810

Perform training of neural network based on selected images and derive weights and biases defining chosen neural network

812

Configure set of multipliers and adders to implement selected neural network

814

Scale weights and biases and determine output position of decimal or binary point for each layer of neural network

816

Determine output using neural network

Fig. 8

900

Device
902

Device
902

Device
902

Device
902

Device
902

Access Point
906

LAN connection 904

Network
Hardware
992

WAN connection 904

LAN connection 904

Device
902

Device
902

Access Point
906

FIG. 9A

FIG. 9B

900

921

Main
Processor

Cache —940

I/O
Port | I/O
Port | Memory
Port

Main
Memory —922

903

I/O
Device —930b

970 — Bridge

950

I/O
Device —930a-n

FIG. 9C

Europäisches
Patentamt
European
Patent Office
Office européen
des brevets

# EUROPEAN SEARCH REPORT

**Application Number**

EP 24 19 0993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZENG KUN ET AL: "Coupled Deep Autoencoder for Single Image Super-Resolution", IEEE TRANSACTIONS ON CYBERNETICS, IEEE, PISCATAWAY, NJ, USA, vol. 47, no. 1, 1 January 2017 (2017-01-01), pages 27-37, XP011636981, ISSN: 2168-2267, DOI: 10.1109/TCYB.2015.2501373 [retrieved on 2016-12-14] | 1-3,10, 12 | INV. G06T3/4046 G06T3/4053 G06N3/063 |
| Y | * abstract * <br> * sections II, III.A * <br> * figures 1, 2, 4 * | 4-9,11, 13-15 | |
| Y | LEE DONGHYEON ET AL: "Hardware Design of a Context-Preserving Filter-Reorganized CNN for Super-Resolution", IEEE JOURNAL ON EMERGING AND SELECTED TOPICS IN CIRCUITS AND SYSTEMS, IEEE, PISCATAWAY, NJ, USA, vol. 9, no. 4, 1 December 2019 (2019-12-01), pages 612-622, XP011760486, ISSN: 2156-3357, DOI: 10.1109/JETCAS.2019.2950536 [retrieved on 2019-12-10] * abstract * * sections II.D, V * * figure 7 * | 4-6, 13-15 | |

**TECHNICAL FIELDS SEARCHED (IPC)**

G06T
G06N

-/--

The present search report has been drawn up for all claims

| Place of search | Date of completion of the search | Examiner |
|---|---|---|
| Munich | 16 December 2024 | Katartzis, Antonios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................................

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 19 0993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PIERRE-EMMANUEL NOVAC ET AL: "Quantization and Deployment of Deep Neural Networks on Microcontrollers", ARXIV.ORG, CORNELL UNIVERSITY LIBRARY, 201 OLIN LIBRARY CORNELL UNIVERSITY ITHACA, NY 14853, 23 September 2021 (2021-09-23), XP091045634, DOI: 10.3390/S21092984 * abstract * * sections 2, 4.1 * ----- | 6-9,11, 15 | |

**TECHNICAL FIELDS SEARCHED (IPC)**

The present search report has been drawn up for all claims

| Place of search | Date of completion of the search | Examiner |
|---|---|---|
| Munich | 16 December 2024 | Katartzis, Antonios |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)